# EUROPEAN PATENT APPLICATION

(11) **EP 4 726 340 A1**
(43) Date of publication of application: **15.04.2026**
(21) Application number: 24850895.4
(22) Date of filing: 01.08.2024
(51) Int. Cl.: G01J 3/28, G01J 3/02

(54) **SPECTRUM ACQUISITION METHOD AND DEVICE**

(30) Priority: 07.08.2023 CN 202310987701
(71) Applicant: Huawei Technologies Co., Ltd., Shenzhen, Guangdong 518129 (CN)
(72) Inventor: ZHANG, Xiang, Shenzhen, Guangdong 518129 (CN); LI, Chong, Shenzhen, Guangdong 518129 (CN); DONG, Xiaowen, Shenzhen, Guangdong 518129 (CN)
(74) Representative: Huawei European IPR
(86) International application number: PCT/CN2024/109127
(87) International publication number: WO 2025/031250

(57) **Abstract**

An optical spectrum obtaining method and apparatus are provided, relating to the field of optical technologies. The optical spectrum obtaining apparatus includes: a beam splitting unit, a first optical spectrum computation unit, a second optical spectrum computation unit, and a processing unit. The beam splitting unit is configured to: receive a light beam from a light source, split the light beam into a first polarization component and a second polarization component with different polarization directions, transmit the first polarization component to the first optical spectrum computation unit, and transmit the second polarization component to the second optical spectrum computation unit. The first optical spectrum computation unit is configured to compute an optical spectrum of the first polarization component. The second optical spectrum computation unit is configured to compute an optical spectrum of the second polarization component. The processing unit is configured to obtain an optical spectrum of the light beam based on the optical spectrum of the first polarization component and the optical spectrum of the second polarization component. This application can resolve a problem that a computational spectrometer cannot determine an optical spectrum of an unpolarized light beam. The optical spectrum obtaining apparatus provided in this application can obtain the unpolarized optical spectrum of the light beam. This application is for optical spectrum obtaining.

## Description

This application claims priority to Chinese Patent Application No. 202310987701.8, filed on August 7, 2023, and entitled "OPTICAL SPECTRUM OBTAINING METHOD AND APPARATUS", which is incorporated herein by reference in its entirety.

### TECHNICAL FIELD

This application relates to the field of optical technologies, and in particular, to an optical spectrum obtaining method and apparatus.

### BACKGROUND

With development of optical technologies, spectrometers are being used increasing widely. A spectrometer can analyze an incoming light beam, to obtain an optical spectrum of the light beam.

There are various types of spectrometers such as computational spectrometers, dispersive spectrometers, and Fourier spectrometers. Among them, the computational spectrometers are compact and offer high optical spectrum analysis efficiency. A computational spectrometer includes a medium layer, a detector array, and a processing module. After passing through the medium layer, a polarized light beam is transmitted to the detector array. The detector array can detect the received polarized light beam, to obtain spatial intensity distribution of the polarized light beam. The processing module can obtain an optical spectrum of the polarized light beam based on the spatial intensity distribution.

However, the light beam received by the spectrometer typically has a plurality of types of polarization components, and the medium layer usually exhibits a dual-polarization characteristic. Therefore, different polarization components of the light beam propagate through the medium layer in distinct ways, resulting in different spatial intensity distribution for those polarization components. As a result, the detector array does not capture spatial intensity distribution of a single polarization component, and the processing module cannot determine the optical spectrum of the light beam based on the detection result of the detector array.

### SUMMARY

This application provides an optical spectrum obtaining method and apparatus, to resolve a problem that a computational spectrometer cannot determine an optical spectrum of a light beam based on a detection result of a detector array. The technical solutions are as follows:

According to a first aspect, this application provides an optical spectrum obtaining apparatus. The optical spectrum obtaining apparatus includes: a beam splitting unit, a first optical spectrum computation unit, a second optical spectrum computation unit, and a processing unit, where the beam splitting unit is configured to: receive a light beam from a light source, and split the light beam into a first polarization component and a second polarization component with different polarization directions; the beam splitting unit is further configured to: transmit the first polarization component to the first optical spectrum computation unit, and transmit the second polarization component to the second optical spectrum computation unit; the first optical spectrum computation unit is configured to compute an optical spectrum of the first polarization component; the second optical spectrum computation unit is configured to compute an optical spectrum of the second polarization component; and the processing unit is configured to obtain an optical spectrum of the light beam based on the optical spectrum of the first polarization component and the optical spectrum of the second polarization component. For example, the processing unit adds the optical spectrum of the first polarization component and the optical spectrum of the second polarization component, to obtain the optical spectrum of the light beam.

For example, the first optical spectrum computation unit includes a first medium layer, a first detector array, and a first processing module, and the second optical spectrum computation unit includes a second medium layer, a second detector array, and a second processing module. The beam splitting unit is configured to transmit the first polarization component to the first medium layer; the first detector array is configured to detect the first polarization component that passes through the first medium layer, to obtain spatial intensity distribution of the first polarization component; and the first processing module is configured to compute the optical spectrum of the first polarization component based on the spatial intensity distribution of the first polarization component. The beam splitting unit is configured to transmit the second polarization component to the second medium layer; the second detector array is configured to detect the second polarization component that passes through the second medium layer, to obtain spatial intensity distribution of the second polarization component; and the second processing module is configured to compute the optical spectrum of the second polarization component based on the spatial intensity distribution of the second polarization component.

Optionally, the first processing module, the second processing module, and the processing unit are integrated together. Alternatively, the first processing module, the second processing module, and the processing unit are independent of each other. This is not limited in this embodiment of this application.

In conclusion, in the optical spectrum obtaining apparatus provided in this application, the beam splitting unit splits the light beam whose optical spectrum is to be analyzed into the two types of polarization components, the first optical spectrum computation unit and the second optical spectrum computation unit respectively obtain optical spectrum detection of the two types of polarization components, and then the processing unit obtains the optical spectrum of the light beam based on the optical spectra of the two types of polarization components. In this way, when the light beam is unpolarized light, the optical spectrum obtaining apparatus can also obtain the optical spectrum of the light beam. In addition, the optical spectrum obtaining apparatus can not only obtain the optical spectrum of the unpolarized light, but also obtain an optical spectrum of polarized light. Therefore, the optical spectrum obtaining apparatus has a low requirement on the light beam whose optical spectrum needs to be analyzed.

The optical spectrum computation unit in the optical spectrum obtaining apparatus and a computational spectrometer obtain an optical spectrum by using a same principle. Therefore, compared with a dispersive spectrometer, the optical spectrum obtaining apparatus features a lower process requirement, lower preparation difficulty, a lower requirement on intensity of the light beam whose optical spectrum is to be analyzed, a smaller volume at same resolution, and the like. Compared with a Fourier spectrometer, the optical spectrum obtaining apparatus features a smaller volume at same resolution and a faster speed of obtaining the optical spectrum of the light beam.

In this embodiment of this application, the polarization direction of the first polarization component is different from the polarization direction of the second polarization component. The polarization directions of the first polarization component and the second polarization component are not limited in this application. Optionally, the first polarization component and the second polarization component are orthogonal to each other. In this case, the polarization direction of the first polarization component is perpendicular to the polarization component of the second polarization component. It may be understood that the first polarization component and the second polarization component may alternatively be not orthogonal. In addition, the first polarization component may not be represented, and the second polarization component may not be represented either.

Further, there are a plurality of implementations of the beam splitting unit.
(1) In an implementation of the beam splitting unit, the beam splitting unit includes a fiber polarization beam splitter. The fiber polarization beam splitter includes an input fiber, a first output fiber, a second output fiber, and a beam splitter.

The input fiber is a non-polarization-maintaining fiber, the first output fiber is a polarization-maintaining fiber configured to transmit the first polarization component, and the second output fiber is a polarization-maintaining fiber configured to transmit the second polarization component. One end of the input fiber, one end of the first output fiber, and one end of the second output fiber are all connected to the beam splitter, the other end of the first output fiber is connected to the first optical spectrum computation unit (for example, the first medium layer in the first optical spectrum computation unit), and the other end of the second output fiber is connected to the second optical spectrum computation unit (for example, the second medium layer in the second optical spectrum computation unit).

The input fiber is configured to transmit the light beam from the light source to the beam splitter. The beam splitter is configured to split the light beam from the input fiber, to obtain a first light beam and a second light beam. The beam splitter is further configured to: transmit the first light beam to the first output fiber, and transmit the second light beam to the second output fiber. The first output fiber is configured to transmit the first polarization component. Therefore, when the first light beam includes light in a second polarization direction, the light in the second polarization direction cannot be transmitted through the first output fiber. In this case, light output through the first output fiber is the first polarization component in a first polarization direction. The second output fiber is configured to transmit the second polarization component. Therefore, when the second light beam includes light in the first polarization direction, the light in the first polarization direction cannot be transmitted through the second output fiber. In this case, light output through the second output fiber is the second polarization component in the second polarization direction.

(2) In another implementation of the beam splitting unit, the beam splitting unit includes a polarization beam splitter prism. The polarization beam splitter prism is a prism that can split the light beam into the first polarization component and the second polarization component. The polarization beam splitter prism has a beam splitting surface inside, and the light beam incident to the polarization beam splitter prism is split into the first polarization component and the second polarization component on the beam splitting surface.

Optionally, when the beam splitting unit includes the polarization beam splitter prism, the optical spectrum obtaining apparatus further includes a reflecting unit having a reflective surface; the beam splitting unit is configured to: transmit the first polarization component to the first optical spectrum computation unit (for example, the first medium layer in the first optical spectrum computation unit), and transmit the second polarization component to the reflective surface of the reflecting unit; and the reflective surface is configured to reflect the second polarization component to the second optical spectrum computation unit (for example, the second medium layer in the second optical spectrum computation unit). Under an action of the reflective surface, the first optical spectrum computation unit (for example, the first medium layer in the first optical spectrum computation unit) and the second optical spectrum computation unit (for example, the second medium layer in the second optical spectrum computation unit) may be arranged in parallel on a same side of the beam splitting unit. This facilitates miniaturization of the optical spectrum obtaining apparatus.

Optionally, the optical spectrum obtaining apparatus does not include a reflecting unit. In this case, the second detector array is disposed in an emergent direction of the second polarization component on the polarization beam splitter prism, so that the second polarization component emergent from the polarization beam splitter prism can be directly transmitted to the second optical spectrum computation unit.

Further, there may be a plurality of implementations of the reflecting unit. For example, the reflecting unit is a mirror reflector having a reflective film. For another example, the reflecting unit includes a reflecting prism, where the reflecting prism has the foregoing reflective surface. In this case, a first prism surface of the polarization beam splitter prism is attached to a second prism surface of the reflecting prism, so that an overall volume of the reflecting unit and the beam splitting unit is small, which facilitates miniaturization of the optical spectrum obtaining apparatus. Optionally, the first prism surface is not attached to the second prism surface. This is not limited in this application.

Optionally, any optical spectrum obtaining apparatus provided in embodiments of this application further includes a collimator lens, where the collimator lens is configured to: receive the light beam from the light source, and transmit the light beam to the beam splitting unit after collimating the light beam, where the collimation performed by the collimator lens on the light beam is for reducing divergence of the light beam, to facilitate subsequent detection of light by the detector arrays (the first detector array and the second detector array). Optionally, the optical spectrum obtaining apparatus does not include a collimator lens. This is not limited in this application.

Optionally, in this embodiment of this application, an incident direction of the first polarization component on the first optical spectrum computation unit is parallel to an incident direction of the second polarization component on the second optical spectrum computation unit. In this way, the first optical spectrum computation unit and the second optical spectrum computation unit can be disposed in parallel on the same side of the beam splitting unit. This helps reduce space occupied by the optical spectrum obtaining apparatus, and helps improve an integration level of the optical spectrum obtaining apparatus.

Optionally, an incident direction of the first polarization component on the first optical spectrum computation unit is not parallel to an incident direction of the second polarization component on the second optical spectrum computation unit. Instead, there is an included angle between the incident direction of the first polarization component on the first optical spectrum computation unit and the incident direction of the second polarization component on the second optical spectrum computation unit, or the incident direction of the first polarization component on the first optical spectrum computation unit is perpendicular to the incident direction of the second polarization component on the second optical spectrum computation unit. This is not limited in this application.

That the first optical spectrum computation unit and the second optical spectrum computation unit obtain the optical spectra of the polarization components may be controlled by the processing unit, or may not be controlled by the processing unit. Optionally, the processing unit is further configured to send a control signal to the first optical spectrum computation unit (for example, the first detector array in the first optical spectrum computation unit) and the second optical spectrum computation unit (for example, the second detector array in the second optical spectrum computation unit); the first optical spectrum computation unit is configured to compute the optical spectrum of the first polarization component based on the control signal; and the second optical spectrum computation unit is configured to compute the optical spectrum of the second polarization component based on the control signal.

Optionally, the control signal indicates a start time point and exposure duration; the first optical spectrum computation unit is configured to compute, at the start time point, the optical spectrum of the first polarization component received within the exposure duration; and the second optical spectrum computation unit is configured to compute, at the start time point, the optical spectrum of the second polarization component received within the exposure duration. For example, the first detector array is configured to detect, at the start time point, spatial intensity distribution of the first polarization component that is received within the exposure duration and that passes through the first medium layer; and the first processing module obtains the optical spectrum of the first polarization component based on the spatial intensity distribution. The second detector array is configured to detect, at the start time point, spatial intensity distribution of the second polarization component that is received within the exposure duration and that passes through the second medium layer; and the second processing module obtains the optical spectrum of the second polarization component based on the spatial intensity distribution.

Optionally, the optical spectrum obtaining apparatus provided in embodiments of this application further includes an optical path coupling unit. The optical path coupling unit is connected between the light source and the beam splitting unit, and is configured to couple the light beam from the light source to the beam splitting unit. When the optical spectrum obtaining apparatus includes the collimator lens, the collimator lens is disposed on an optical path on which the light source, the optical path coupling unit, and the beam splitting unit are located.

According to a second aspect, this application provides an optical spectrum obtaining method. The method is performed by the optical spectrum obtaining apparatus according to any design of the first aspect, the optical spectrum obtaining apparatus includes: a beam splitting unit, a first optical spectrum computation unit, a second optical spectrum computation unit, and a processing unit, and the method includes: The beam splitting unit receives a light beam from a light source, and then splits the light beam into a first polarization component and a second polarization component with different polarization directions. Then, the beam splitting unit transmits the first polarization component to the first optical spectrum computation unit, and transmits the second polarization component to the second optical spectrum computation unit, so that the first optical spectrum computation unit computes an optical spectrum of the first polarization component, and the second optical spectrum computation unit computes an optical spectrum of the second polarization component. Finally, the processing unit obtains an optical spectrum of the light beam based on the optical spectrum of the first polarization component and the optical spectrum of the second polarization component.

The processing unit can obtain the optical spectrum that is of the first polarization component and that is obtained by the first optical spectrum computation unit and the optical spectrum that is of the second polarization component and that is obtained by the second optical spectrum computation unit. For example, the first optical spectrum computation unit transmits the computed optical spectrum (carried in an electrical signal or an optical signal) of the first polarization component to the processing unit, and the second optical spectrum computation unit transmits the computed optical spectrum (carried in an electrical signal or an optical signal) of the second polarization component to the processing unit. For another example, the processing unit reads the optical spectrum of the first polarization component from the first optical spectrum computation unit, and reads the optical spectrum of the second polarization component from the second optical spectrum computation unit.

The processing unit can obtain the optical spectrum of the light beam based on the optical spectrum of the first polarization component and the optical spectrum of the second polarization component. For example, the processing unit adds the optical spectrum of the first polarization component and the optical spectrum of the second polarization component, to obtain the optical spectrum of the light beam.

Further, the processing unit may further perform a corresponding analysis operation based on the optical spectrum of the light beam, for example, analyze composition of a substance, and analyze concentration of a material in liquid.

Optionally, that the first optical spectrum computation unit obtains the optical spectrum of the first polarization component and that the second optical spectrum computation unit obtains the optical spectrum of the second polarization component may be controlled by the processing unit, or may not be controlled by the processing unit.

Optionally, when that the first optical spectrum computation unit obtains the optical spectrum of the first polarization component and that the second optical spectrum computation unit obtains the optical spectrum of the second polarization component may be controlled by the processing unit, the method further includes: The processing unit sends a control signal to the first optical spectrum computation unit (for example, a first detector array in the first optical spectrum computation unit) and the second optical spectrum computation unit (for example, a second detector array in the second optical spectrum computation unit). The first optical spectrum computation unit may compute the optical spectrum of the first polarization component based on the control signal. The second optical spectrum computation unit may compute the optical spectrum of the second polarization component based on the control signal.

For example, the first detector array in the first optical spectrum computation unit detects spatial intensity distribution of the first polarization component based on the control signal, and the first processing module obtains the optical spectrum of the first polarization component based on the spatial intensity distribution. The second detector array in the second optical spectrum computation unit detects spatial intensity distribution of the second polarization component based on the control signal, and the second processing module obtains the optical spectrum of the second polarization component based on the spatial intensity distribution.

Optionally, the control signal indicates a start time point and exposure duration; the first optical spectrum computation unit may compute, at the start time point, the optical spectrum of the first polarization component received within the exposure duration; and the second optical spectrum computation unit may compute, at the start time point, the optical spectrum of the second polarization component received within the exposure duration.

For example, the first detector array may detect, at the start time point, the spatial intensity distribution of the first polarization component that is received within the exposure duration and that passes through a first medium layer; and the first processing module obtains the optical spectrum of the first polarization component based on the spatial intensity distribution. The second detector array may detect, at the start time point, the spatial intensity distribution of the second polarization component that is received within the exposure duration and that passes through a second medium layer; and the second processing module obtains the optical spectrum of the second polarization component based on the spatial intensity distribution.

According to a third aspect, this application provides an optical spectrum obtaining method. The method is performed by a processing unit in the optical spectrum obtaining apparatus according to any design of the first aspect, and the optical spectrum obtaining apparatus includes: a beam splitting unit, a first optical spectrum computation unit, a second optical spectrum computation unit, and the processing unit; the beam splitting unit is configured to: receive a light beam from a light source, split the light beam into a first polarization component and a second polarization component, transmit the first polarization component to the first optical spectrum computation unit, and transmit the second polarization component to the second optical spectrum computation unit; the first optical spectrum computation unit is configured to compute an optical spectrum of the first polarization component; and the second detector array is configured to compute an optical spectrum of the second polarization component. The method includes: The processing unit obtains the optical spectrum of the first polarization component computed by the first optical spectrum computation unit and the optical spectrum of the second polarization component computed by the second optical spectrum computation unit, and then obtains an optical spectrum of the light beam based on the optical spectrum of the first polarization component and the optical spectrum of the second polarization component.

The processing unit can obtain the optical spectrum that is of the first polarization component and that is obtained by the first optical spectrum computation unit and the optical spectrum that is of the second polarization component and that is obtained by the second optical spectrum computation unit. For example, the first optical spectrum computation unit transmits the computed optical spectrum (carried in an electrical signal or an optical signal) of the first polarization component to the processing unit, and the second optical spectrum computation unit transmits the computed optical spectrum (carried in an electrical signal or an optical signal) of the second polarization component to the processing unit. For another example, the processing unit reads the optical spectrum of the first polarization component from the first optical spectrum computation unit, and reads the optical spectrum of the second polarization component from the second optical spectrum computation unit.

The processing unit can obtain the optical spectrum of the light beam based on the optical spectrum of the first polarization component and the optical spectrum of the second polarization component. For example, the processing unit adds the optical spectrum of the first polarization component and the optical spectrum of the second polarization component, to obtain the optical spectrum of the light beam.

Further, the processing unit may further perform a corresponding analysis operation based on the optical spectrum of the light beam, for example, analyze composition of a substance, and analyze concentration of a material in liquid.

Optionally, that the first optical spectrum computation unit obtains the optical spectrum of the first polarization component and that the second optical spectrum computation unit obtains the optical spectrum of the second polarization component may be controlled by the processing unit, or may not be controlled by the processing unit.

Optionally, when that the first optical spectrum computation unit obtains the optical spectrum of the first polarization component and that the second optical spectrum computation unit obtains the optical spectrum of the second polarization component may be controlled by the processing unit, the method further includes: The processing unit sends a control signal to the first optical spectrum computation unit (for example, a first detector array in the first optical spectrum computation unit) and the second optical spectrum computation unit (for example, a second detector array in the second optical spectrum computation unit). The first optical spectrum computation unit may compute the optical spectrum of the first polarization component based on the control signal. The second optical spectrum computation unit may compute the optical spectrum of the second polarization component based on the control signal.

For example, the first detector array in the first optical spectrum computation unit detects spatial intensity distribution of the first polarization component based on the control signal, and the first processing module obtains the optical spectrum of the first polarization component based on the spatial intensity distribution. The second detector array in the second optical spectrum computation unit detects spatial intensity distribution of the second polarization component based on the control signal, and the second processing module obtains the optical spectrum of the second polarization component based on the spatial intensity distribution.

Optionally, the control signal indicates a start time point and exposure duration; the first optical spectrum computation unit may compute, at the start time point, the optical spectrum of the first polarization component received within the exposure duration; and the second optical spectrum computation unit may compute, at the start time point, the optical spectrum of the second polarization component received within the exposure duration.

For example, the first detector array may detect, at the start time point, the spatial intensity distribution of the first polarization component that is received within the exposure duration and that passes through a first medium layer; and the first processing module obtains the optical spectrum of the first polarization component based on the spatial intensity distribution. The second detector array may detect, at the start time point, the spatial intensity distribution of the second polarization component that is received within the exposure duration and that passes through a second medium layer; and the second processing module obtains the optical spectrum of the second polarization component based on the spatial intensity distribution.

According to a fourth aspect, this application provides a processing unit. The processing unit belongs to the optical spectrum obtaining apparatus according to any design of the first aspect, and the optical spectrum obtaining apparatus further includes: the optical spectrum obtaining apparatus includes: a beam splitting unit, a first optical spectrum computation unit, a second optical spectrum computation unit, and the processing unit; the beam splitting unit is configured to: receive a light beam from a light source, split the light beam into a first polarization component and a second polarization component, transmit the first polarization component to the first optical spectrum computation unit, and transmit the second polarization component to the second optical spectrum computation unit; the first optical spectrum computation unit is configured to compute an optical spectrum of the first polarization component; the second detector array is configured to compute an optical spectrum of the second polarization component; and the processing unit includes: an obtaining module and a processing module. The obtaining module is configured to obtain the optical spectrum of the first polarization component computed by the first optical spectrum computation unit and the optical spectrum of the second polarization component computed by the second optical spectrum computation unit. The processing module is configured to obtain an optical spectrum of the light beam based on the optical spectrum of the first polarization component and the optical spectrum of the second polarization component.

Further, the processing unit further includes an analysis module, where the analysis module is configured to perform a corresponding analysis operation based on the optical spectrum that is of the light beam and that is obtained by the processing module through processing, for example, analyze composition of a substance, and analyze concentration of a material in liquid.

Optionally, that the first optical spectrum computation unit obtains the optical spectrum of the first polarization component and that the second optical spectrum computation unit obtains the optical spectrum of the second polarization component may be controlled by the processing unit, or may not be controlled by the processing unit. When that the first optical spectrum computation unit obtains the optical spectrum of the first polarization component and that the second optical spectrum computation unit obtains the optical spectrum of the second polarization component may be controlled by the processing unit, the processing unit further includes a sending module, where the sending module is configured to send a control signal to the first optical spectrum computation unit (for example, a first detector array in the first optical spectrum computation unit) and the second optical spectrum computation unit (for example, a second detector array in the second optical spectrum computation unit). The first optical spectrum computation unit may compute the optical spectrum of the first polarization component based on the control signal. The second optical spectrum computation unit may compute the optical spectrum of the second polarization component based on the control signal.

For example, the first detector array in the first optical spectrum computation unit detects spatial intensity distribution of the first polarization component based on the control signal, and a first processing module obtains the optical spectrum of the first polarization component based on the spatial intensity distribution. The second detector array in the second optical spectrum computation unit detects spatial intensity distribution of the second polarization component based on the control signal, and a second processing module obtains the optical spectrum of the second polarization component based on the spatial intensity distribution.

Optionally, the control signal indicates a start time point and exposure duration; the first optical spectrum computation unit may compute, at the start time point, the optical spectrum of the first polarization component received within the exposure duration; and the second optical spectrum computation unit may compute, at the start time point, the optical spectrum of the second polarization component received within the exposure duration.

For example, the first detector array may detect, at the start time point, the spatial intensity distribution of the first polarization component that is received within the exposure duration and that passes through a first medium layer; and the first processing module obtains the optical spectrum of the first polarization component based on the spatial intensity distribution. The second detector array may detect, at the start time point, the spatial intensity distribution of the second polarization component that is received within the exposure duration and that passes through a second medium layer; and the second processing module obtains the optical spectrum of the second polarization component based on the spatial intensity distribution.

According to a fifth aspect, this application provides a processing unit. The processing unit belongs to the optical spectrum obtaining apparatus according to any design of the first aspect, and the optical spectrum obtaining apparatus further includes: the optical spectrum obtaining apparatus includes: a beam splitting unit, a first optical spectrum computation unit, a second optical spectrum computation unit, and the processing unit; the beam splitting unit is configured to: receive a light beam from a light source, split the light beam into a first polarization component and a second polarization component, transmit the first polarization component to the first optical spectrum computation unit, and transmit the second polarization component to the second optical spectrum computation unit; the first optical spectrum computation unit is configured to compute an optical spectrum of the first polarization component; the second detector array is configured to compute an optical spectrum of the second polarization component; and the processing unit includes: a processor and a memory, where the memory stores a program, and the processor is configured to execute the program stored in the memory, to implement the optical spectrum obtaining method according to any design of the third aspect.

According to a sixth aspect, this application provides a chip. The chip includes a programmable logic circuit and/or program instructions. The chip is configured to implement the optical spectrum obtaining method according to any design of the third aspect when running.

According to a seventh aspect, this application provides a computer-readable storage medium. The computer-readable storage medium stores instructions. When the instructions are run on a computer, the computer is caused to perform the optical spectrum obtaining method according to any design of the third aspect.

According to an eighth aspect, this application provides a computer program product including instructions. When the computer program product runs on a computer, the computer is caused to perform the dispersion compensation method according to any design of the first aspect; or when the computer program product runs on a computer, the computer is caused to perform the optical spectrum obtaining method according to any design of the third aspect.

For effects of the second aspect to the eighth aspect, refer to the effects of the corresponding designs of the first aspect. Details are not described herein in this application.

### BRIEF DESCRIPTION OF DRAWINGS

FIG. 1 is a diagram of a structure of an optical spectrum obtaining apparatus according to an embodiment of this application;
FIG. 2 is a diagram of application of an optical spectrum obtaining apparatus according to an embodiment of this application;
FIG. 3 is a diagram of application of another optical spectrum obtaining apparatus according to an embodiment of this application;
FIG. 4 is a diagram of application of another optical spectrum obtaining apparatus according to an embodiment of this application;
FIG. 5 is a diagram of a beam splitting unit according to an embodiment of this application;
FIG. 6 is a diagram of another beam splitting unit according to an embodiment of this application;
FIG. 7 is a diagram of another optical spectrum obtaining apparatus according to an embodiment of this application;
FIG. 8 is a diagram of still another optical spectrum obtaining apparatus according to an embodiment of this application;
FIG. 9 is a flowchart of an optical spectrum obtaining method according to an embodiment of this application;
FIG. 10 is a flowchart of another optical spectrum obtaining method according to an embodiment of this application;
FIG. 11 is a block diagram of a processing unit according to an embodiment of this application; and
FIG. 12 is a diagram of a structure of a processing unit according to an embodiment of this application.

### DESCRIPTION OF EMBODIMENTS

To make principles and technical solutions of this application clearer, the following further describes implementations of this application in detail with reference to the accompanying drawings.

This application relates to a spectrometer. The spectrometer is an apparatus capable of analyzing a light beam to obtain an optical spectrum of the light beam. The optical spectrum includes intensity of light of each wavelength in the light beam.

The spectrometer can be used in various fields such as agriculture, industry, and aerospace fields. The spectrometer can be used in a scenario of analyzing substance composition. For example, a light beam is directed onto a substance whose compositions are to be analyzed; and then the spectrometer analyzes the light beam reflected by the substance or the light beam transmitted by the substance, or performs analysis based on a light beam excited by the light beam, to obtain the optical spectrum of the light beam. Then, the compositions of the substance are analyzed based on the optical spectrum of the beam. Herein, the example in which the spectrometer is used for substance composition analysis. It may be understood that the spectrometer further has other application scenarios. Details are not described herein in this application.

With development of science and technology, there are various types of spectrometers. For example, common spectrometers include computational spectrometers, dispersive spectrometers, and Fourier spectrometers. Compared with the dispersive spectrometer, the computational spectrometer exhibits lower fabrication complexity, reduced manufacturing difficulty, diminished intensity for light beams whose optical spectrum is to be analyzed, a smaller size at same resolution, and the like. Compared with the Fourier spectrometer, the computational spectrometer has a smaller size at same resolution and is more efficient in obtaining the optical spectrum of the light beam. It can be learned that the computational spectrometer is superior to the dispersive spectrometer and the Fourier spectrometer in performance.

The computational spectrometer includes a medium layer, a detector array, and a processing module. The computational spectrometer is for analyzing an optical spectrum of a polarized light beam. The polarized light beam is transmitted to the medium layer, and undergoes various optical reactions such as random reflection, random refraction, random scattering, and random diffraction under the action of encoded media at the medium layer.

The polarized light beam is transmitted to the detector array after passing through the medium layer, and the detector array can detect the received polarized light beam, to obtain spatial intensity distribution of the polarized light beam. The detector array includes a plurality of detectors arranged in an array. Each of the detectors can detect intensity of the received light beam, and the intensity detected by the plurality of detectors constitute the spatial intensity distribution of the polarized light beam. The spatial intensity distribution represents the intensity of the light beam received at each location in the detector array.

The detector array can further transmit the spatial intensity distribution to the processing module, and the processing module can obtain the optical spectrum of the polarized light beam based on the spatial intensity distribution. For example, the processing module may prestore a correspondence between a plurality of polarized-light-beam optical spectra and a plurality of spatial intensity distribution patterns. After receiving the spatial intensity distribution sent by the detector array, the processing module may query the correspondence to obtain a polarized-light-beam optical spectrum corresponding to the spatial intensity distribution, and use the polarized-light-beam optical spectrum as the optical spectrum of the polarized light beam. For another example, the processing module may prestore a method for reversely computing the optical spectrum of the polarized light beam based on the spatial intensity distribution of the polarized light beam. After obtaining the spatial intensity distribution of the polarized light beam, the processing module may obtain the optical spectrum of the polarized light beam through the reverse computation by using the method.

However, in an application scenario of the computational spectrometer, the light beam whose optical spectrum needs to be analyzed by the computational spectrometer is usually not the polarized light beam, but an unpolarized light beam having a plurality of types of polarization components. In addition, the medium layer usually exhibits a dual-polarization characteristic. Therefore, different polarization components of the unpolarized light beam propagate through the medium layer in distinct ways, resulting in different spatial intensity distribution for those polarization components. As a result, the detector array detects a composite of spatial intensity distribution of two types of polarization components rather than spatial intensity distribution of a single polarization component, and the processing module cannot determine the optical spectrum based on an association relationship between spatial intensity distribution and an optical spectrum of a polarization component, either.

This application provides an optical spectrum obtaining apparatus. The optical spectrum obtaining apparatus is capable of not only analyzing an optical spectrum of a polarized light beam, but also an optical spectrum of an unpolarized light beam, thus placing less stringent requirements on light beams whose optical spectra need to be analyzed.

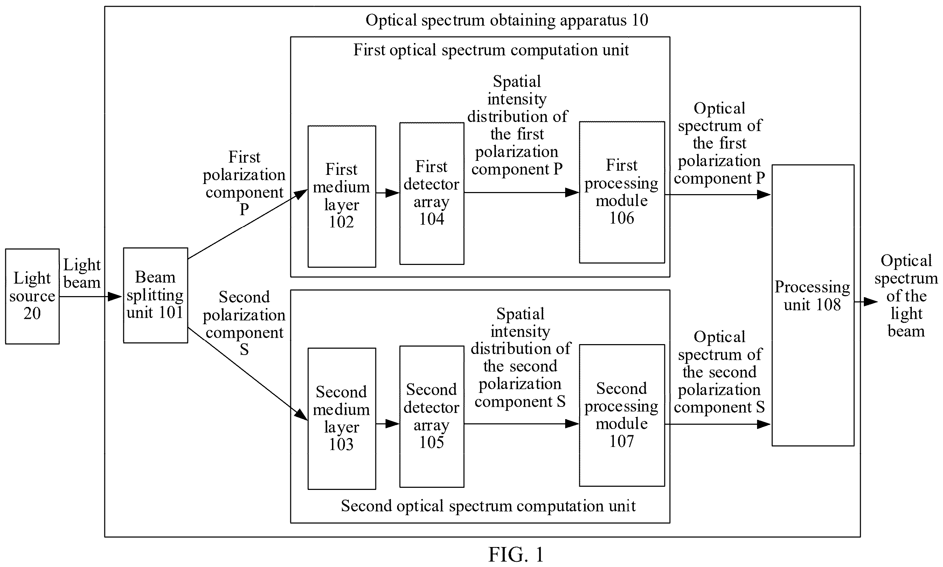

For example, FIG. 1 is a diagram of a structure of an optical spectrum obtaining apparatus according to an embodiment of this application. As shown in FIG. 1, the optical spectrum obtaining apparatus 10 includes a beam splitting unit 101, a first optical spectrum computation unit, a second optical spectrum computation unit, and a processing unit 108. The first optical spectrum computation unit includes a first medium layer 102, a first detector array 104, and a first processing module 106, and the second computational spectrometer includes a second medium layer 103, a second detector array 105, and a second processing module 107.

The beam splitting unit 101 is configured to: receive a light beam from a light source 20, and split the light beam into a first polarization component P and a second polarization component S with different polarization directions. The beam splitting unit 101 may be referred to as a polarization beam splitter (polarizing beam splitter, PBS).

The beam splitting unit 101 is further configured to: transmit the first polarization component P to the first optical spectrum computation unit, and transmit the second polarization component S to the second optical spectrum computation unit. The first optical spectrum computation unit computes an optical spectrum of the first polarization component P, and the second optical spectrum computation unit computes an optical spectrum of the second polarization component S.

For example, the beam splitting unit 101 is configured to: transmit the first polarization component P to the first medium layer 102 in the first optical spectrum computation unit, and transmit the second polarization component S to the second medium layer 103 in the second optical spectrum computation unit.

Each of the first medium layer 102 in the first optical spectrum computation unit and the second medium layer 103 in the second optical spectrum computation unit has a plurality of encoded media (not shown in the figure). After the first polarization component P is transmitted to the first medium layer 102, the first polarization component P undergoes optical reactions such as random reflection, random refraction, random scattering, and random diffraction occur on the first polarization component P under the action of the encoded media in the first medium layer 102 (such a process may be considered as random filtering performed on the first polarization component P). After the second polarization component P is transmitted to the second medium layer 103, the second polarization component S undergoes optical reactions such as random reflection, random refraction, random scattering, and random diffraction under the action of the encoded media in the second medium layer 103 (such a process may be considered as random filtering performed on the second polarization component S). Transmission of a polarization component in encoded media in a medium layer is not limited in this embodiment of this application. The encoded media are wavelength-sensitive. Optical signals of different wavelengths propagate differently in the first medium layer 102, and optical signals of different wavelengths also propagate differently in the second medium layer 103.

The first polarization component P is transmitted to the first detector array 104 in the first optical spectrum computation unit after passing through the first medium layer 102. The second polarization component S is transmitted to the second detector array 105 in the second optical spectrum computation unit after passing through the second medium layer 103. The first detector array 104 is configured to detect the first polarization component P that passes through the first medium layer 102, to obtain spatial intensity distribution of the first polarization component P. The second detector array 105 is configured to detect the second polarization component S that passes through the second medium layer 103, to obtain spatial intensity distribution of the second polarization component S. The first detector array 104 and the second detector array 105 both include a plurality of detectors arranged in an array, and each detector can detect received light to obtain intensity of the light. Spatial intensity distribution detected by each detector array includes intensity detected by all detectors in the detector array.

The first detector array 104 can transmit the detected spatial intensity distribution of the first polarization component P to the first processing module 106 in the first optical spectrum computation unit, and the second detector array 105 can transmit the detected spatial intensity distribution of the second polarization component S to the second processing module 107 in the second optical spectrum computation unit. The first processing module 106 can analyze the spatial intensity distribution of the first polarization component P, to obtain the optical spectrum of the first polarization component P. The second processing module 107 can analyze the spatial intensity distribution of the second polarization component S, to obtain the optical spectrum of the second polarization component S.

For example, the first processing module 106 is configured to query a correspondence between the spatial intensity distribution of the first polarization component P and the optical spectrum of the first polarization component P based on the spatial intensity distribution of the first polarization component P, to obtain the optical spectrum of the first polarization component P. The second processing module 107 is configured to query a correspondence between the spatial intensity distribution of the second polarization component S and the optical spectrum of the second polarization component S based on the spatial intensity distribution of the second polarization component S, to obtain the optical spectrum of the second polarization component S.

For another example, the first processing module 106 may prestore a method for reversely computing the optical spectrum of the first polarization component based on the spatial intensity distribution of the first polarization component P. After obtaining the spatial intensity distribution of the first polarization component P, the first processing module 106 may obtain the optical spectrum of the first polarization component through the reverse computation by using the method. The second processing module 107 may prestore a method for reversely computing the optical spectrum of the first polarization component based on the spatial intensity distribution of the second polarization component S. After obtaining the spatial intensity distribution of the second polarization component S, the second processing module 107 may obtain the optical spectrum of the first polarization component through the reverse computation by using the method.

The processing unit 108 is configured to obtain the optical spectrum that is of the first polarization component P and that is obtained by the first optical spectrum computation unit and the optical spectrum that is of the second polarization component S and that is obtained by the second optical spectrum computation unit. For example, the first optical spectrum computation unit transmits the computed optical spectrum (carried in an electrical signal or an optical signal) of the first polarization component P to the processing unit 108, and the second optical spectrum computation unit transmits the computed optical spectrum (carried in an electrical signal or an optical signal) of the second polarization component S to the processing unit 108. Alternatively, the processing unit 108 reads the optical spectrum of the first polarization component P from the first optical spectrum computation unit, and reads the optical spectrum of the second polarization component S from the second optical spectrum computation unit.

The processing unit 108 is further configured to obtain an optical spectrum of the light beam based on the optical spectrum of the first polarization component P and the optical spectrum of the second polarization component S. For example, the processing unit 108 adds the optical spectrum of the first polarization component P and the optical spectrum of the second polarization component S, to obtain the optical spectrum of the light beam.

Further, the processing unit 108 may further be configured to perform a corresponding analysis operation based on the optical spectrum of the light beam, for example, analyze composition of a substance, and analyze concentration of a material in liquid.

The processing unit 108 may be a device that has the foregoing functions, for example, a microcontroller unit (microcontroller unit, MCU).

In conclusion, in the optical spectrum obtaining apparatus provided in this application, the beam splitting unit splits the light beam whose optical spectrum is to be analyzed into the two types of polarization components, the first optical spectrum computation unit and the second optical spectrum computation unit respectively obtain optical spectrum detection of the two types of polarization components, and then the processing unit obtains the optical spectrum of the light beam based on the optical spectra of the two types of polarization components. In this way, when the light beam is unpolarized light, the optical spectrum obtaining apparatus can also obtain the optical spectrum of the light beam. In addition, the optical spectrum obtaining apparatus can not only obtain the optical spectrum of the unpolarized light, but also obtain an optical spectrum of polarized light. Therefore, the optical spectrum obtaining apparatus has a low requirement on the light beam whose optical spectrum needs to be analyzed.

In addition, the optical spectrum computation unit in the optical spectrum obtaining apparatus and a computational spectrometer obtain an optical spectrum by using a same principle. Therefore, compared with a dispersive spectrometer, the optical spectrum obtaining apparatus features a lower process requirement, lower preparation difficulty, a lower requirement on intensity of the light beam whose optical spectrum is to be analyzed, a smaller volume at same resolution (for example, picometer (pm)), and the like. Compared with a Fourier spectrometer, the optical spectrum obtaining apparatus features a smaller volume at same resolution and a faster speed of obtaining the optical spectrum of the light beam (for example, duration for obtaining the optical spectrum reaches a millisecond (ms) level).

Optionally, the first processing module 106, the second processing module 107, and the processing unit 108 are integrated. Alternatively, the first processing module 106, the second processing module 107, and the processing unit 108 are independent of each other. This is not limited in this embodiment of this application.

The following uses four examples to describe functions of the optical spectrum obtaining apparatus provided in this application.

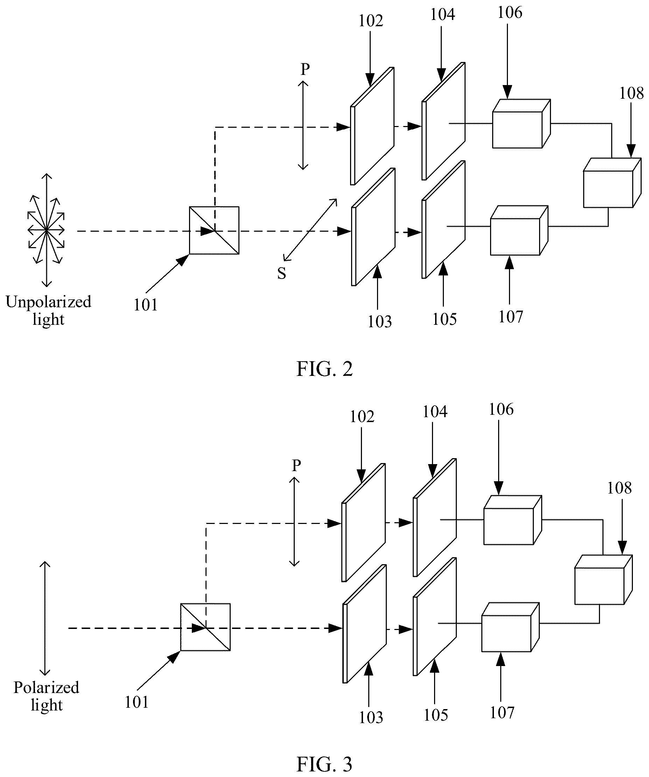

For example, as shown in FIG. 2, when the light beam from the light source is the unpolarized light, the unpolarized light includes light in various polarization directions. After the unpolarized light is transmitted to the beam splitting unit 101, the unpolarized light is split into the first polarization component P and the second polarization component S by the beam splitting unit 101. It may be understood that the polarization direction of the first polarization component P is a first polarization direction, and the polarization direction of the second polarization component S is a second polarization direction. In the unpolarized light, light in the first polarization direction is transmitted to the first medium layer 102, and light in the second polarization direction is transmitted to the second medium layer 103. In the unpolarized light, light whose polarization direction is different from both the first polarization direction and the second polarization direction is decomposed into the light in the first polarization direction and the light in the second polarization direction. In addition, the light in the first polarization direction is transmitted to the first medium layer 102, and the light in the second polarization direction is transmitted to the second medium layer 103. In this way, all light transmitted to the first medium layer 102 is the light in the first polarization direction, and all light transmitted to the second medium layer 103 is the light in the second polarization direction. The light transmitted to the first medium layer 102 is referred to as the first polarization component P of the light beam incident to the beam splitting unit 101, and the light transmitted to the second medium layer 103 is referred to as the second polarization component S of the light beam. The first polarization component P is transmitted to the first detector array 104 after passing through the first medium layer 102, the first detector array 104 detects the spatial intensity distribution of the first polarization component P, and the first processing module 106 obtains the optical spectrum of the first polarization component P based on the spatial intensity distribution. The second polarization component S is transmitted to the second detector array 105 after passing through the second medium layer 103, the second detector array 105 detects the spatial intensity distribution of the second polarization component S, and the second processing module 107 obtains the optical spectrum of the second polarization component S based on the spatial intensity distribution. Finally, the processing unit 108 obtains the optical spectrum of the unpolarized light based on the optical spectrum of the first polarization component P and the optical spectrum of the second polarization component S.

For another example, as shown in FIG. 3, when the light beam from the light source is polarized light, if a polarization direction of the polarized light is a first polarization direction, the polarized light is transmitted by the beam splitting unit 101 to the first medium layer 102 as the first polarization component P. In addition, the second polarization component S transmitted by the beam splitting unit 101 to the second medium layer 103 is zero. The first polarization component P is transmitted to the first detector array 104 after passing through the first medium layer 102, the first detector array 104 detects the spatial intensity distribution of the first polarization component P, and the first processing module 106 obtains the optical spectrum of the first polarization component P based on the spatial intensity distribution. Because the second polarization component S is zero, the second detector array 105 detects that the spatial intensity distribution of the second polarization component S is zero, and all intensity in the optical spectrum that is of the second polarization component S and that is obtained by the second processing module 107 based on the spatial intensity distribution is zero. Finally, the processing unit 108 obtains an optical spectrum of the polarized light based on the optical spectrum of the first polarization component P and the optical spectrum of the second polarization component S. In addition, because all the intensity in the optical spectrum of the second polarization component S is zero, the optical spectrum of the polarized light is the optical spectrum of the first polarization component P.

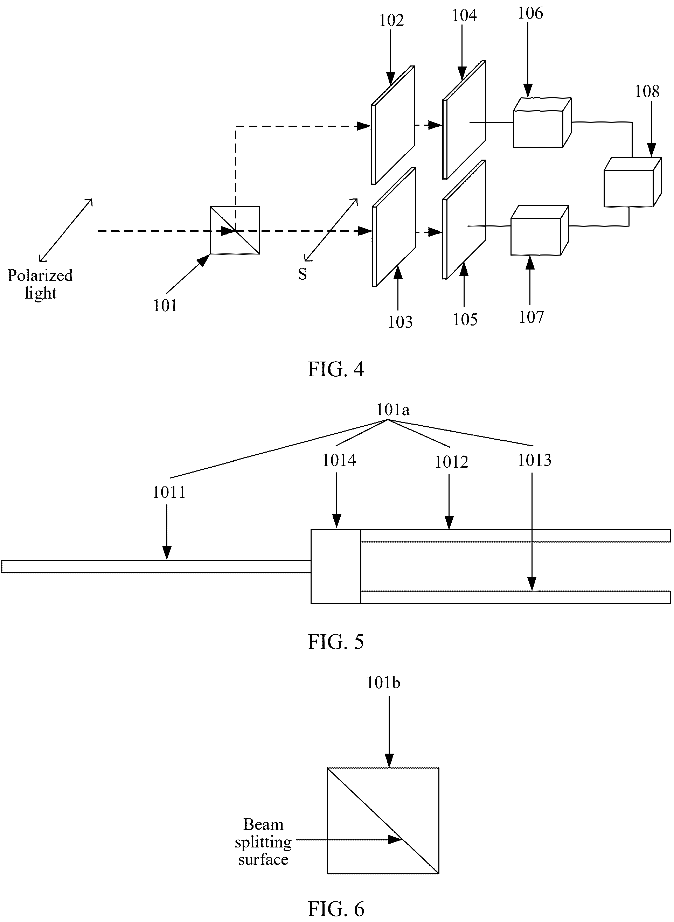

For still another example, as shown in FIG. 4, when the light beam from the light source is polarized light, if a polarization direction of the polarized light is a second polarization direction, the polarized light is transmitted by the beam splitting unit 101 to the second medium layer 103 as the second polarization component S. In addition, the first polarization component P transmitted by the beam splitting unit 101 to the first medium layer 102 is zero. The second polarization component S is transmitted to the second detector array 105 after passing through the second medium layer 103, the second detector array 105 detects the spatial intensity distribution of the second polarization component S, and the second processing module 107 obtains the optical spectrum of the second polarization component S based on the spatial intensity distribution. Because the first polarization component P is zero, the first detector array 104 detects that the spatial intensity distribution of the first polarization component P is zero, and all intensity in the optical spectrum that is of the first polarization component P and that is obtained by the first processing module 106 based on the spatial intensity distribution is zero. Finally, the processing unit 108 obtains an optical spectrum of the polarized light based on the optical spectrum of the first polarization component P and the optical spectrum of the second polarization component S. In addition, because all the intensity in the optical spectrum of the first polarization component P is zero, the optical spectrum of the polarized light is the optical spectrum of the second polarization component S.

For another example, when the light beam from the light source includes polarized light in a first polarization direction, polarized light in a second polarization direction, and unpolarized light, the polarized light in the first polarization direction is transmitted to the first medium layer 102, and the polarized light in the second polarization direction is transmitted to the second medium layer 103. In the unpolarized light, light in the first polarization direction is transmitted to the first medium layer 102, and light in the second polarization direction is transmitted to the second medium layer 103. In the unpolarized light, light whose polarization direction is different from both the first polarization direction and the second polarization direction is decomposed into the light in the first polarization direction and the light in the second polarization direction. In addition, the light in the first polarization direction is transmitted to the first medium layer 102, and the light in the second polarization direction is transmitted to the second medium layer 103. In this way, all light transmitted to the first medium layer 102 is the light in the first polarization direction, and all light transmitted to the second medium layer 103 is the light in the second polarization direction. The light transmitted to the first medium layer 102 is referred to as the first polarization component P of the light beam incident to the beam splitting unit 101, and the light transmitted to the second medium layer 103 is referred to as the second polarization component S of the light beam. The first polarization component P is transmitted to the first detector array 104 after passing through the first medium layer 102, the first detector array 104 detects the spatial intensity distribution of the first polarization component P, and the first processing module 106 obtains the optical spectrum of the first polarization component P based on the spatial intensity distribution. The second polarization component S is transmitted to the second detector array 105 after passing through the second medium layer 103, the second detector array 105 detects the spatial intensity distribution of the second polarization component S, and the second processing module 107 obtains the optical spectrum of the second polarization component S based on the spatial intensity distribution. Finally, the processing unit 108 obtains an optical spectrum of the unpolarized light based on the optical spectrum of the first polarization component P and the optical spectrum of the second polarization component S.

It can be learned from the foregoing four examples that the optical spectrum obtaining apparatus provided in this application can not only obtain the optical spectrum of the polarized light, but also obtain the optical spectrum of the unpolarized light, and can further obtain the optical spectrum of the light beam including both the polarized light and the unpolarized light. Therefore, the optical spectrum obtaining apparatus does not limit a polarization characteristic of the input light beam.

In this embodiment of this application, the polarization direction of the first polarization component P is different from the polarization direction of the second polarization component S. The polarization directions of the first polarization component P and the second polarization component S are not limited in this application. Optionally, the first polarization component P and the second polarization component S are orthogonal to each other. In this case, the polarization direction of the first polarization component P is perpendicular to the polarization component of the second polarization component S. It may be understood that the first polarization component P and the second polarization component S may alternatively be not orthogonal. In addition, the first polarization component may not be represented by P, and the second polarization component may not be represented by S either.

Further, there are a plurality of implementations of the beam splitting unit 101.
(1) An implementation of the beam splitting unit 101 is shown in FIG. 5. The beam splitting unit 101 includes a fiber polarization beam splitter 101a. The fiber polarization beam splitter 101a includes an input fiber 1011, a first output fiber 1012, a second output fiber 1013, and a beam splitter 1014.

The input fiber 1011 is a non-polarization-maintaining fiber, the first output fiber 1012 is a polarization-maintaining fiber configured to transmit the first polarization component P, and the second output fiber 1013 is a polarization-maintaining fiber configured to transmit the second polarization component S. One end of the input fiber 1011, one end of the first output fiber 1012, and one end of the second output fiber 1013 are all connected to the beam splitter, the other end of the first output fiber 1012 is connected to the first optical spectrum computation unit (for example, the first medium layer 102 in the first optical spectrum computation unit), and the other end of the second output fiber 1013 is connected to the second optical spectrum computation unit (for example, the second medium layer 103 in the second optical spectrum computation unit).

The input fiber 1011 is configured to transmit the light beam from the light source to the beam splitter 1014. The beam splitter 1014 is configured to split the light beam from the input fiber 1011, to obtain a first light beam and a second light beam. Polarization characteristics of the first light beam and the second light beam may both be the same as the polarization characteristic of the light beam from the input fiber 1011. For example, the light beam from the input fiber 1011, the first light beam, and the second light beam are all unpolarized light. The beam splitter 1014 is further configured to: transmit the first light beam to the first output fiber 1012, and transmit the second light beam to the second output fiber 1013. The first output fiber 1012 is configured to transmit the first polarization component P. Therefore, when the first light beam includes the light in the second polarization direction, the light in the second polarization direction cannot be transmitted through the first output fiber 1012. In this case, light output through the first output fiber 1012 is the first polarization component P in the first polarization direction. The second output fiber 1013 is configured to transmit the second polarization component S. Therefore, when the second light beam includes the light in the first polarization direction, the light in the first polarization direction cannot be transmitted through the second output fiber 1013. In this case, light output through the second output fiber 1013 is the second polarization component S in the second polarization direction.

Polarization characteristics of the first light beam and the second light beam may alternatively be different from the polarization characteristic of the light beam from the light source. This is not limited in this embodiment of this application. For example, the beam splitter 1014 splits, based on the polarization characteristic, the light beam from the input fiber 1011, where the first light beam is the first polarization component P, and the second light beam is the second polarization component S. The first polarization component P can be transmitted to the first optical spectrum computation unit (for example, the first medium layer 102 in the first optical spectrum computation unit) along the first output fiber 1012, and the second polarization component S can be transmitted to the second optical spectrum computation unit (for example, the second medium layer 103 in the second optical spectrum computation unit) along the second output fiber 1013.

(2) Another implementation of the beam splitting unit 101 is shown in FIG. 6. The beam splitting unit 101 includes a polarization beam splitter prism 101b. The polarization beam splitter prism 101b is a prism that can split the light beam into the first polarization component P and the second polarization component S. The polarization beam splitter prism 101b has a beam splitting surface inside, and the light beam incident to the polarization beam splitter prism 101b is split into the first polarization component P and the second polarization component S on the beam splitting surface.

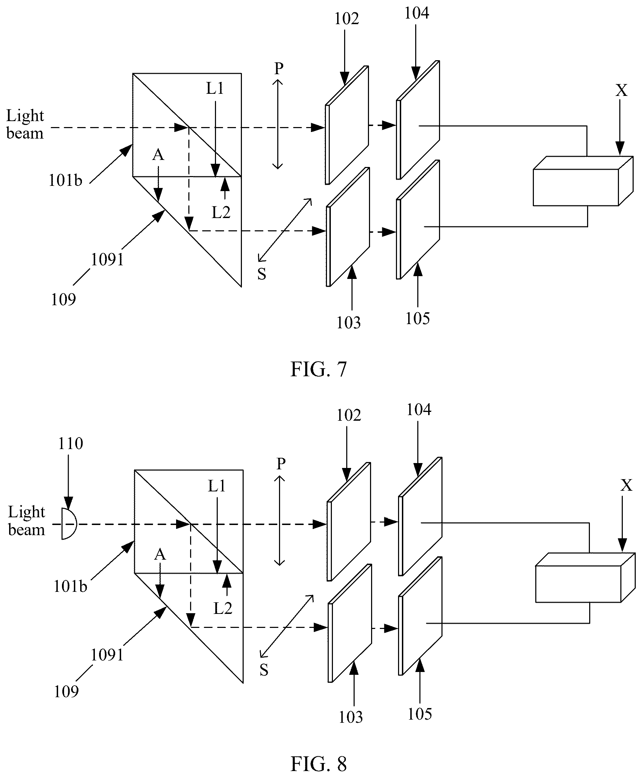

Optionally, when the beam splitting unit 101 includes the polarization beam splitter prism 101b, as shown in FIG. 7, the optical spectrum obtaining apparatus 10 further includes a reflecting unit 109 having a reflective surface A; the beam splitting unit 101 is configured to: transmit the first polarization component P to the first optical spectrum computation unit (for example, the first medium layer 102 in the first optical spectrum computation unit), and transmit the second polarization component S to the reflective surface A of the reflecting unit 109; and the reflective surface A is configured to reflect the second polarization component S to the second optical spectrum computation unit (for example, the second medium layer 103 in the second optical spectrum computation unit). Under an action of the reflective surface A, the first optical spectrum computation unit (for example, the first medium layer 102 in the first optical spectrum computation unit) and the second optical spectrum computation unit (for example, the second medium layer 103 in the second optical spectrum computation unit) may be arranged in parallel on a same side of the beam splitting unit 104. This facilitates miniaturization of the optical spectrum obtaining apparatus.

Optionally, the optical spectrum obtaining apparatus 10 does not include a reflecting unit 109. In this case, the second detector array 105 is disposed in an emergent direction of the second polarization component S on the polarization beam splitter prism 101b, so that the second polarization component S emergent from the polarization beam splitter prism 101b can be directly transmitted to the second optical spectrum computation unit (for example, the second medium layer 103 in the second optical spectrum computation unit).

Further, there may be a plurality of implementations of the reflecting unit 109. For example, the reflecting unit 109 is a mirror reflector having a reflective film A. For another example, as shown in FIG. 7, the reflecting unit 109 includes a reflecting prism 1091, where the reflecting prism 1091 has the foregoing reflective surface A. In this case, a first prism surface L1 of the polarization beam splitter prism 101b is attached to a second prism surface L2 of the reflecting prism 1091, so that an overall volume of the reflecting unit 109 and the beam splitting unit 101 is small, which facilitates miniaturization of the optical spectrum obtaining apparatus. Optionally, the first prism surface L1 is not attached to the second prism surface L2. This is not limited in this application.

Optionally, any optical spectrum obtaining apparatus provided in embodiments of this application further includes a collimator lens. The optical spectrum obtaining apparatus shown in FIG. 7 is used as an example. When the optical spectrum obtaining apparatus shown in FIG. 7 further includes a collimator lens 110, a structure of the optical spectrum obtaining apparatus is shown in FIG. 8. The collimator lens 110 is configured to: receive the light beam from the light source 20, and transmit the light beam to the beam splitting unit 101 after collimating the light beam, where the collimation performed by the collimator lens 110 on the light beam is for reducing divergence of the light beam, to facilitate subsequent detection of light by the detector arrays (the first detector array and the second detector array). Optionally, the optical spectrum obtaining apparatus 10 does not include a collimator lens 110. This is not limited in this application.

Optionally, in this embodiment of this application, an incident direction of the first polarization component P on the first optical spectrum computation unit (for example, the first medium layer 102) is parallel to an incident direction of the second polarization component S on the second optical spectrum computation unit (for example, the second medium layer 103). In this way, the first optical spectrum computation unit and the second optical spectrum computation unit can be disposed in parallel on the same side of the beam splitting unit 101. This helps reduce space occupied by the optical spectrum obtaining apparatus 10, and helps improve an integration level of the optical spectrum obtaining apparatus 10.

Optionally, an incident direction of the first polarization component P on the optical spectrum computation unit (for example, the first medium layer 102) is not parallel to an incident direction of the second polarization component S on the optical spectrum computation unit (for example, the second medium layer 103). Instead, there is an included angle between the incident direction of the first polarization component P on the optical spectrum computation unit (for example, the first medium layer 102) and the incident direction of the second polarization component S on the optical spectrum computation unit (for example, the second medium layer 103), or the incident direction of the first polarization component P on the optical spectrum computation unit (for example, the first medium layer 102) is perpendicular to the incident direction of the second polarization component S on the optical spectrum computation unit (for example, the second medium layer 103). This is not limited in this application.

That the first optical spectrum computation unit and the second optical spectrum computation unit obtain the optical spectra of the polarization components may be controlled by the processing unit 108, or may not be controlled by the processing unit 108.

Optionally, the processing unit 108 is further configured to send a control signal to the first optical spectrum computation unit (for example, the first detector array 104 in the first optical spectrum computation unit) and the second optical spectrum computation unit (for example, the second detector array 105 in the second optical spectrum computation unit); the first optical spectrum computation unit is configured to compute the optical spectrum of the first polarization component P based on the control signal; and the second optical spectrum computation unit is configured to compute the optical spectrum of the second polarization component S based on the control signal.

For example, the first detector array 104 in the first optical spectrum computation unit detects the spatial intensity distribution of the first polarization component P based on the control signal, and the first processing module 106 obtains the optical spectrum of the first polarization component P based on the spatial intensity distribution. The second detector array 105 in the second optical spectrum computation unit detects the spatial intensity distribution of the second polarization component S based on the control signal, and the second processing module 107 obtains the optical spectrum of the second polarization component S based on the spatial intensity distribution.

Optionally, the control signal indicates a start time point and exposure duration; the first optical spectrum computation unit is configured to compute, at the start time point, the optical spectrum of the first polarization component received within the exposure duration; and the second optical spectrum computation unit is configured to compute, at the start time point, the optical spectrum of the second polarization component received within the exposure duration.

For example, the first detector array 104 is configured to detect, at the start time point, the spatial intensity distribution of the first polarization component P that is received within the exposure duration and that passes through the first medium layer 102; and the first processing module 106 obtains the optical spectrum of the first polarization component P based on the spatial intensity distribution. The second detector array 105 is configured to detect, at the start time point, the spatial intensity distribution of the second polarization component S that is received within the exposure duration and that passes through the second medium layer 103; and the second processing module 107 obtains the optical spectrum of the second polarization component S based on the spatial intensity distribution.

Optionally, the control signal does not indicate a start time point and exposure duration. In this case, the first optical spectrum computation unit is configured to compute, at a time point at which the detection signal is received, the optical spectrum of the first polarization component P received within first fixed duration (preset duration); and the second optical spectrum computation unit is configured to compute, at the time point at which the detection signal is received, the optical spectrum of the second polarization component received within second fixed duration (preset duration).

For example, the first detector array 104 is configured to detect, when receiving the control signal, the spatial intensity distribution of the first polarization component P that is received within the first fixed duration and that passes through the first medium layer 102; and the first processing module 106 obtains the optical spectrum of the first polarization component P based on the spatial intensity distribution. The second detector array 105 is configured to detect, when receiving the control signal, the spatial intensity distribution of the second polarization component S that is received within the second fixed duration and that passes through the second medium layer 103; and the second processing module 107 obtains the optical spectrum of the second polarization component S based on the spatial intensity distribution.

Optionally, that the optical spectrum computation units obtain the optical spectra of the polarization components is not controlled by the processing unit 108. Instead, the first optical spectrum computation unit is configured to periodically obtain the optical spectrum of the received first polarization component P; and the second optical spectrum computation unit is configured to periodically obtain the optical spectrum of the received second polarization component S. A periodicity of obtaining the optical spectrum by the first optical spectrum computation unit is the same as or different from a periodicity of obtaining the optical spectrum by the second optical spectrum computation unit. In addition, the processing unit 108 is configured to determine the optical spectrum of the light beam based on an optical spectrum that is of the first polarization component P and that is most recently obtained by the first optical spectrum computation unit and an optical spectrum that is of the second polarization component S and that is most recently obtained by the second optical spectrum computation unit.

Optionally, the optical spectrum obtaining apparatus provided in embodiments of this application further includes an optical path coupling unit (not shown in the accompanying drawings). The optical path coupling unit is connected between the light source and the beam splitting unit, and is configured to couple the light beam from the light source to the beam splitting unit. When the optical spectrum obtaining apparatus includes the collimator lens, the collimator lens is disposed on an optical path on which the light source, the optical path coupling unit, and the beam splitting unit are located. For example, the optical path coupling unit may include a plurality of lenses, or the optical path coupling unit may include an optical fiber (for example, an optical fiber having a high numerical aperture (numerical aperture, NA)).

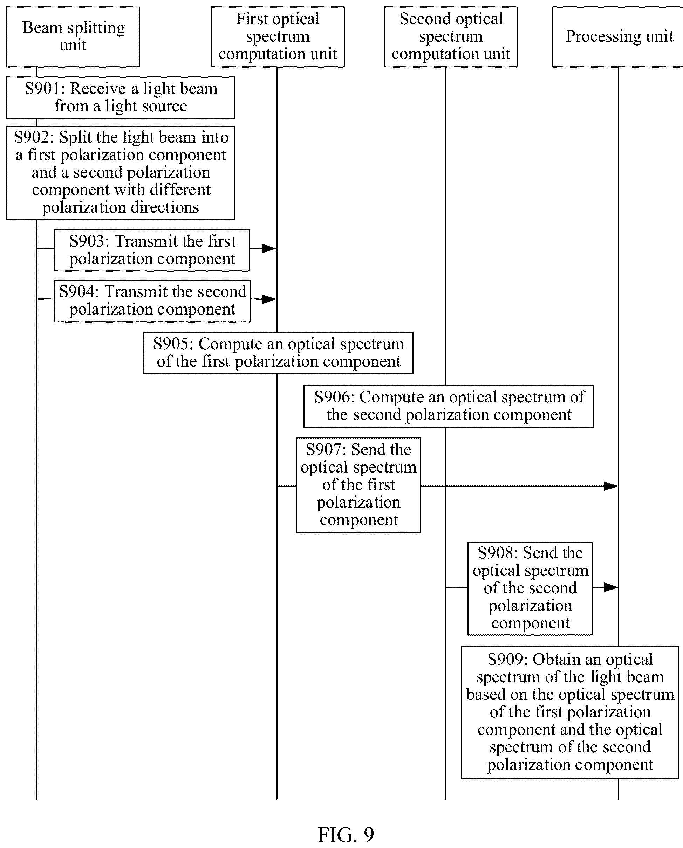

Based on the any optical spectrum obtaining apparatus provided in embodiments of this application, embodiments of this application further provide an optical spectrum obtaining method performed by the optical spectrum obtaining apparatus. For example, FIG. 9 is a flowchart of an optical spectrum obtaining apparatus according to an embodiment of this application. As shown in FIG. 9, the method includes the following steps.

S901: A beam splitting unit receives a light beam from a light source.

S902: The beam splitting unit splits the light beam into a first polarization component and a second polarization component with different polarization directions.

S903: The beam splitting unit transmits the first polarization component to a first optical spectrum computation unit.

S904: The beam splitting unit transmits the second polarization component to a second optical spectrum computation unit.

For example, as shown in FIG. 1, the beam splitting unit 101 can receive the light beam from the light source 20, and split the light beam into the first polarization component P and the second polarization component S with different polarization directions. The beam splitting unit 101 can further transmit the first polarization component P to the first optical spectrum computation unit, and transmit the second polarization component S to the second optical spectrum computation unit. For example, the beam splitting unit 101 is configured to: transmit the first polarization component P to the first medium layer 102 in the first optical spectrum computation unit, and transmit the second polarization component S to the second medium layer 103 in the second optical spectrum computation unit.

S905: The first optical spectrum computation unit computes an optical spectrum of the first polarization component.

As shown in FIG. 1, each of the first medium layer 102 in the first optical spectrum computation unit and the second medium layer 103 in the second optical spectrum computation unit has the plurality of encoded media (not shown in the figure). After the first polarization component P is transmitted to the first medium layer 102, the optical reactions such as the random reflection, the random refraction, the random scattering, and the random diffraction occur on the first polarization component P under the action of the encoded media in the first medium layer 102 (this process may be considered as the random filtering performed on the first polarization component P). The transmission of the polarization component in the encoded media in the medium layer is not limited in this embodiment of this application. The encoded media are wavelength-sensitive. The optical signals of the different wavelengths propagate differently in the first medium layer 102, and the transmission of the optical signals of the different wavelengths also propagate differently in the second medium layer 103.

The first polarization component P is transmitted to the first detector array 104 in the first optical spectrum computation unit after passing through the first medium layer 102. The first detector array 104 is configured to detect the first polarization component P that passes through the first medium layer 102, to obtain the spatial intensity distribution of the first polarization component P.

The first detector array 104 can transmit the spatial intensity distribution that is of the first polarization component P and that is obtained through the detection to the first processing module 106 in the first optical spectrum computation unit. The first processing module 106 can analyze the spatial intensity distribution of the first polarization component P, to obtain the optical spectrum of the first polarization component P.

For example, the first processing module 106 can query the correspondence between the spatial intensity distribution of the first polarization component P and the optical spectrum of the first polarization component P based on the spatial intensity distribution of the first polarization component P, to obtain the optical spectrum of the first polarization component P.

For another example, the first processing module 106 may prestore the method for reversely computing the optical spectrum of the first polarization component based on the spatial intensity distribution of the first polarization component P. After obtaining the spatial intensity distribution of the first polarization component P, the first processing module 106 may obtain the optical spectrum of the first polarization component through the reverse computation by using the method.

S906: The second optical spectrum computation unit computes an optical spectrum of the second polarization component.

For a process in which the second optical spectrum computation unit computes the optical spectrum of the second polarization component, refer to the process in which the first optical spectrum computation unit computes the optical spectrum of the first polarization component in S905. Details are not described in this embodiment of this application.

S907: The first optical spectrum computation unit sends the optical spectrum of the first polarization component to a processing unit.

S908: The second optical spectrum computation unit sends the optical spectrum of the second polarization component to the processing unit.

The processing unit can obtain the optical spectrum that is of the first polarization component P and that is obtained by the first optical spectrum computation unit and the optical spectrum that is of the second polarization component S and that is obtained by the second optical spectrum computation unit. For example, in this embodiment of this application, the first optical spectrum computation unit transmits the computed optical spectrum (carried in the electrical signal or the optical signal) of the first polarization component P to the processing unit, and the second optical spectrum computation unit transmits the computed optical spectrum (carried in the electrical signal or the optical signal) of the second polarization component S to the processing unit. Optionally, the processing unit may alternatively read the optical spectrum of the first polarization component P from the first optical spectrum computation unit, and read the optical spectrum of the second polarization component S from the second optical spectrum computation unit.

S909: The processing unit obtains an optical spectrum of the light beam based on the optical spectrum of the first polarization component and the optical spectrum of the second polarization component.

For example, the processing unit adds the optical spectrum of the first polarization component P and the optical spectrum of the second polarization component S, to obtain the optical spectrum of the light beam.

Further, after S909, the processing unit may further perform a corresponding analysis operation based on the optical spectrum of the light beam, for example, analyze composition of a substance, and analyze concentration of a material in liquid.

That the first optical spectrum computation unit obtains the optical spectrum of the first polarization component in S905 and that the second optical spectrum computation unit obtains the optical spectrum of the second polarization component in S906 may be controlled by the processing unit, or may not be controlled by the processing unit.

Optionally, when that the first optical spectrum computation unit obtains the optical spectrum of the first polarization component in S905 and that the second optical spectrum computation unit obtains the optical spectrum of the second polarization component in S906 may be controlled by the processing unit, before S905 and S906, the method further includes: The processing unit sends a control signal to the first optical spectrum computation unit (for example, a first detector array in the first optical spectrum computation unit) and the second optical spectrum computation unit (for example, a second detector array in the second optical spectrum computation unit). In S905, the first optical spectrum computation unit may compute the optical spectrum of the first polarization component based on the control signal. In S906, the second optical spectrum computation unit may compute the optical spectrum of the second polarization component based on the control signal.

For example, in S905, the first detector array in the first optical spectrum computation unit detects spatial intensity distribution of the first polarization component based on the control signal, and a first processing module obtains the optical spectrum of the first polarization component based on the spatial intensity distribution. In S906, the second detector array in the second optical spectrum computation unit detects spatial intensity distribution of the second polarization component based on the control signal, and a second processing module obtains the optical spectrum of the second polarization component based on the spatial intensity distribution.

Optionally, the control signal indicates a start time point and exposure duration; in S905, the first optical spectrum computation unit may compute, at the start time point, the optical spectrum of the first polarization component received within the exposure duration; and in S906, the second optical spectrum computation unit may compute, at the start time point, the optical spectrum of the second polarization component received within the exposure duration.

For example, in S905, the first detector array may detect, at the start time point, the spatial intensity distribution of the first polarization component that is received within the exposure duration and that passes through a first medium layer; and the first processing module obtains the optical spectrum of the first polarization component based on the spatial intensity distribution. In S906, the second detector array may detect, at the start time point, the spatial intensity distribution of the second polarization component that is received within the exposure duration and that passes through a second medium layer; and the second processing module obtains the optical spectrum of the second polarization component based on the spatial intensity distribution.

Optionally, the control signal does not indicate a start time point and exposure duration. In this case, in S905, the first optical spectrum computation unit may compute, at a time point at which the detection signal is received, the optical spectrum of the first polarization component received within first fixed duration (preset duration); and in S906, the second optical spectrum computation unit may compute, at the time point at which the detection signal is received, the optical spectrum of the second polarization component received within second fixed duration (preset duration).

For example, in S905, when receiving the control signal, the first detector array detects the spatial intensity distribution of the first polarization component that is received within the first fixed duration and that passes through a first medium layer; and the first processing module obtains the optical spectrum of the first polarization component based on the spatial intensity distribution. In S906, when receiving the control signal, the second detector array detects the spatial intensity distribution of the second polarization component that is received within the second fixed duration and that passes through a second medium layer; and the second processing module obtains the optical spectrum of the second polarization component based on the spatial intensity distribution.

Optionally, that the optical spectrum computation units obtain the optical spectra of the polarization components is not controlled by the processing unit. Instead, the first optical spectrum computation unit periodically obtains the optical spectrum of the received first polarization component in S905; and the second optical spectrum computation unit periodically obtains the optical spectrum of the received second polarization component in S906. A periodicity of obtaining the optical spectrum by the first optical spectrum computation unit is the same as or different from a periodicity of obtaining the optical spectrum by the second optical spectrum computation unit. In addition, the processing unit is configured to determine the optical spectrum of the light beam based on an optical spectrum that is of the first polarization component and that is most recently obtained by the first optical spectrum computation unit and an optical spectrum that is of the second polarization component and that is most recently obtained by the second optical spectrum computation unit.

In conclusion, in the optical spectrum obtaining method provided in this application, the beam splitting unit splits the light beam whose optical spectrum is to be analyzed into the two types of polarization components, the first optical spectrum computation unit and the second optical spectrum computation unit respectively obtain optical spectrum detection of the two types of polarization components, and then the processing unit obtains the optical spectrum of the light beam based on the optical spectra of the two types of polarization components. In this way, when the light beam is unpolarized light, the optical spectrum of the light beam can also be obtained. In addition, the optical spectrum obtaining method can not only obtain the optical spectrum of the unpolarized light, but also obtain an optical spectrum of polarized light. Therefore, the optical spectrum obtaining method has a low requirement on the light beam whose optical spectrum needs to be analyzed.

In addition, the optical spectrum computation unit and a computational spectrometer obtain an optical spectrum by using a same principle. Therefore, compared with a dispersive spectrometer, the optical spectrum obtaining apparatus features a lower process requirement, lower preparation difficulty, a lower requirement on intensity of the light beam whose optical spectrum is to be analyzed, a smaller volume at same resolution, and the like. Compared with a Fourier spectrometer, the optical spectrum obtaining apparatus features a smaller volume at same resolution and a faster speed of obtaining the optical spectrum of the light beam.

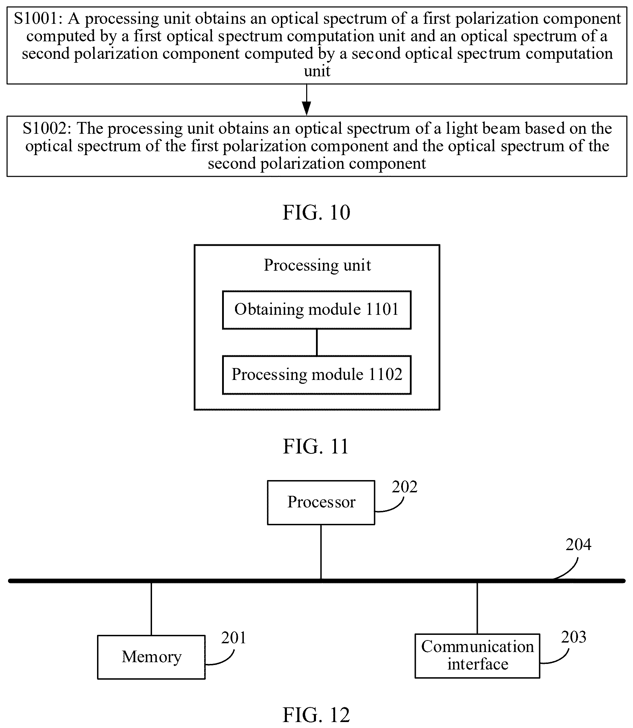

Based on the method performed by the optical spectrum obtaining apparatus, embodiments of this application provide an optical spectrum obtaining method performed by the processing unit in the optical spectrum obtaining apparatus. For example, FIG. 10 is a flowchart of another optical spectrum obtaining method according to an embodiment of this application. As shown in FIG. 10, the method includes the following steps.

S1001: A processing unit obtains an optical spectrum of a first polarization component computed by a first optical spectrum computation unit and an optical spectrum of a second polarization component computed by a second optical spectrum computation unit.

The processing unit can obtain the optical spectrum of the first polarization component P obtained by the first optical spectrum computation unit and the optical spectrum of the second polarization component S obtained by the second optical spectrum computation unit.

For example, the first optical spectrum computation unit transmits the computed optical spectrum (carried in the electrical signal or the optical signal) of the first polarization component P to the processing unit, and the second optical spectrum computation unit transmits the computed optical spectrum (carried in the electrical signal or the optical signal) of the second polarization component S to the processing unit.

For another example, the processing unit reads the optical spectrum of the first polarization component P from the first optical spectrum computation unit, and reads the optical spectrum of the second polarization component S from the second optical spectrum computation unit.

S1002: The processing unit obtains an optical spectrum of a light beam based on the optical spectrum of the first polarization component and the optical spectrum of the second polarization component.

The processing unit can obtain the optical spectrum of the light beam based on the optical spectrum of the first polarization component P and the optical spectrum of the second polarization component S. For example, the processing unit adds the optical spectrum of the first polarization component P and the optical spectrum of the second polarization component S, to obtain the optical spectrum of the light beam.

Further, after S1002, the processing unit may further perform a corresponding analysis operation based on the optical spectrum of the light beam, for example, analyze composition of a substance, and analyze concentration of a material in liquid.

Optionally, that the first optical spectrum computation unit obtains the optical spectrum of the first polarization component and that the second optical spectrum computation unit obtains the optical spectrum of the second polarization component may be controlled by the processing unit, or may not be controlled by the processing unit.

Optionally, when that the first optical spectrum computation unit obtains the optical spectrum of the first polarization component and that the second optical spectrum computation unit obtains the optical spectrum of the second polarization component may be controlled by the processing unit, before S1001, the method further includes: The processing unit sends a control signal to the first optical spectrum computation unit (for example, a first detector array in the first optical spectrum computation unit) and the second optical spectrum computation unit (for example, a second detector array in the second optical spectrum computation unit). The first optical spectrum computation unit may compute the optical spectrum of the first polarization component based on the control signal. The second optical spectrum computation unit may compute the optical spectrum of the second polarization component based on the control signal.

For example, the first detector array in the first optical spectrum computation unit detects spatial intensity distribution of the first polarization component based on the control signal, and a first processing module obtains the optical spectrum of the first polarization component based on the spatial intensity distribution. The second detector array in the second optical spectrum computation unit detects spatial intensity distribution of the second polarization component based on the control signal, and a second processing module obtains the optical spectrum of the second polarization component based on the spatial intensity distribution.

Optionally, the control signal indicates a start time point and exposure duration; the first optical spectrum computation unit may compute, at the start time point, the optical spectrum of the first polarization component received within the exposure duration; and the second optical spectrum computation unit may compute, at the start time point, the optical spectrum of the second polarization component received within the exposure duration.

For example, the first detector array may detect, at the start time point, the spatial intensity distribution of the first polarization component that is received within the exposure duration and that passes through a first medium layer; and the first processing module obtains the optical spectrum of the first polarization component based on the spatial intensity distribution. The second detector array may detect, at the start time point, the spatial intensity distribution of the second polarization component that is received within the exposure duration and that passes through a second medium layer; and the second processing module obtains the optical spectrum of the second polarization component based on the spatial intensity distribution.

Optionally, the control signal does not indicate a start time point and exposure duration. In this case, the first optical spectrum computation unit may compute, at a time point at which the detection signal is received, the optical spectrum of the first polarization component received within first fixed duration (preset duration); and the second optical spectrum computation unit may compute, at the time point at which the detection signal is received, the optical spectrum of the second polarization component received within second fixed duration (preset duration).

For example, when receiving the control signal, the first detector array detects the spatial intensity distribution of the first polarization component that is received within the first fixed duration and that passes through a first medium layer; and the first processing module obtains the optical spectrum of the first polarization component based on the spatial intensity distribution. When receiving the control signal, the second detector array detects the spatial intensity distribution of the second polarization component that is received within the second fixed duration and that passes through a second medium layer; and the second processing module obtains the optical spectrum of the second polarization component based on the spatial intensity distribution.

Optionally, that the optical spectrum computation units obtain the optical spectra of the polarization components is not controlled by the processing unit. Instead, the first optical spectrum computation unit periodically obtains the optical spectrum of the received first polarization component; and the second optical spectrum computation unit periodically obtains the optical spectrum of the received second polarization component. A periodicity of obtaining the optical spectrum by the first optical spectrum computation unit is the same as or different from a periodicity of obtaining the optical spectrum by the second optical spectrum computation unit. In addition, the processing unit is configured to determine the optical spectrum of the light beam based on an optical spectrum that is of the first polarization component and that is most recently obtained by the first optical spectrum computation unit and an optical spectrum that is of the second polarization component and that is most recently obtained by the second optical spectrum computation unit.

In conclusion, in the optical spectrum obtaining method provided in this application, a beam splitting unit splits the light beam whose optical spectrum is to be analyzed into the two types of polarization components, the first optical spectrum computation unit and the second optical spectrum computation unit respectively obtain optical spectrum detection of the two types of polarization components, and then the processing unit obtains the optical spectrum of the light beam based on the optical spectra of the two types of polarization components. In this way, when the light beam is unpolarized light, the optical spectrum of the light beam can also be obtained. In addition, the optical spectrum obtaining method can not only obtain the optical spectrum of the unpolarized light, but also obtain an optical spectrum of polarized light. Therefore, the optical spectrum obtaining method has a low requirement on the light beam whose optical spectrum needs to be analyzed.

In addition, the optical spectrum computation unit and a computational spectrometer obtain an optical spectrum by using a same principle. Therefore, compared with a dispersive spectrometer, the optical spectrum obtaining apparatus features a lower process requirement, lower preparation difficulty, a lower requirement on intensity of the light beam whose optical spectrum is to be analyzed, a smaller volume at same resolution, and the like. Compared with a Fourier spectrometer, the optical spectrum obtaining apparatus features a smaller volume at same resolution and a faster speed of obtaining the optical spectrum of the light beam.

With reference to FIG. 10, the foregoing describes in detail the method performed by the processing unit and provided in embodiments of this application. To implement the functions described in the foregoing methods, the processing unit needs to include corresponding hardware and/or software modules for performing the functions. Embodiments of this application can be implemented in a form of hardware or a combination of hardware and computer software with reference to the execution processes of the methods described in embodiments disclosed in this specification. Whether a function is performed by hardware or hardware driven by computer software depends on particular applications and design constraints of the technical solutions. A person skilled in the art can use different manners to implement the described functions for each particular application with reference to embodiments, but it should not be considered that the implementation goes beyond the scope of embodiments of this application.

In embodiments, a corresponding device can be divided into functional modules based on the foregoing method embodiments. For example, the functional modules are obtained through division based on corresponding functions, or two or more functions are integrated into one processing module. The integrated module can be implemented in a form of hardware. In embodiments, division into the modules is an example, and is specifically used as a possible manner of division into the logical functions. During actual implementation, another division manner can be used.

When the manner of division into the functional modules is used, the following describes, with reference to FIG. 11, the processing unit provided in embodiments of this application.

For example, FIG. 11 is a block diagram of a processing unit according to an embodiment of this application. The processing unit belongs to the optical spectrum obtaining apparatus (for example, the optical spectrum obtaining apparatus in FIG. 1) in the foregoing content. As shown in FIG. 11, the processing unit includes an obtaining module 1101 and a processing module 1102.

The obtaining module 1101 is configured to obtain an optical spectrum of a first polarization component computed by a first optical spectrum computation unit and an optical spectrum of a second polarization component computed by a second optical spectrum computation unit. The processing module 1102 is configured to obtain an optical spectrum of a light beam based on the optical spectrum of the first polarization component and the optical spectrum of the second polarization component.

For the operation that the obtaining module 1101 is configured to perform, refer to S1001 in the foregoing embodiment. For the operation that the processing module 1102 is configured to perform, refer to S1002 in the foregoing embodiment. Details are not described in this embodiment of this application.

Further, the processing unit further includes an analysis module (not shown in FIG. 11), where the analysis module is configured to perform a corresponding analysis operation based on the optical spectrum that is of the light beam and that is obtained by the processing module 1102 through processing, for example, analyze composition of a substance, and analyze concentration of a material in liquid.

Optionally, that the first optical spectrum computation unit obtains the optical spectrum of the first polarization component and that the second optical spectrum computation unit obtains the optical spectrum of the second polarization component may be controlled by the processing unit, or may not be controlled by the processing unit. When that the first optical spectrum computation unit obtains the optical spectrum of the first polarization component and that the second optical spectrum computation unit obtains the optical spectrum of the second polarization component may be controlled by the processing unit, the processing unit further includes a sending module (not shown in FIG. 11), where the sending module is configured to send a control signal to the first optical spectrum computation unit (for example, a first detector array in the first optical spectrum computation unit) and the second optical spectrum computation unit (for example, a second detector array in the second optical spectrum computation unit). The first optical spectrum computation unit may compute the optical spectrum of the first polarization component based on the control signal. The second optical spectrum computation unit may compute the optical spectrum of the second polarization component based on the control signal.

For example, the first detector array in the first optical spectrum computation unit detects spatial intensity distribution of the first polarization component based on the control signal, and a first processing module obtains the optical spectrum of the first polarization component based on the spatial intensity distribution. The second detector array in the second optical spectrum computation unit detects spatial intensity distribution of the second polarization component based on the control signal, and a second processing module obtains the optical spectrum of the second polarization component based on the spatial intensity distribution.

Optionally, the control signal indicates a start time point and exposure duration; the first optical spectrum computation unit may compute, at the start time point, the optical spectrum of the first polarization component received within the exposure duration; and the second optical spectrum computation unit may compute, at the start time point, the optical spectrum of the second polarization component received within the exposure duration.

For example, the first detector array may detect, at the start time point, the spatial intensity distribution of the first polarization component that is received within the exposure duration and that passes through a first medium layer; and the first processing module obtains the optical spectrum of the first polarization component based on the spatial intensity distribution. The second detector array may detect, at the start time point, the spatial intensity distribution of the second polarization component that is received within the exposure duration and that passes through a second medium layer; and the second processing module obtains the optical spectrum of the second polarization component based on the spatial intensity distribution.

Optionally, the control signal does not indicate a start time point and exposure duration. In this case, the first optical spectrum computation unit may compute, at a time point at which the detection signal is received, the optical spectrum of the first polarization component received within first fixed duration (preset duration); and the second optical spectrum computation unit may compute, at the time point at which the detection signal is received, the optical spectrum of the second polarization component received within second fixed duration (preset duration).

For example, when receiving the control signal, the first detector array detects the spatial intensity distribution of the first polarization component that is received within the first fixed duration and that passes through a first medium layer; and the first processing module obtains the optical spectrum of the first polarization component based on the spatial intensity distribution. When receiving the control signal, the second detector array detects the spatial intensity distribution of the second polarization component that is received within the second fixed duration and that passes through a second medium layer; and the second processing module obtains the optical spectrum of the second polarization component based on the spatial intensity distribution.

Optionally, that the optical spectrum computation units obtain the optical spectra of the polarization components is not controlled by the processing unit. Instead, the first optical spectrum computation unit periodically obtains the optical spectrum of the received first polarization component; and the second optical spectrum computation unit periodically obtains the optical spectrum of the received second polarization component. A periodicity of obtaining the optical spectrum by the first optical spectrum computation unit is the same as or different from a periodicity of obtaining the optical spectrum by the second optical spectrum computation unit. In addition, the obtaining module in the processing unit is configured to obtain an optical spectrum that is of the first polarization component and that is most recently obtained by the first optical spectrum computation unit and an optical spectrum that is of the second polarization component and that is most recently obtained by the second optical spectrum computation unit; and the processing module is configured to determine the optical spectrum of the light beam based on the optical spectra.

In conclusion, in the optical spectrum obtaining apparatus in which the processing unit provided in this embodiment of this application is located, a beam splitting unit splits the light beam whose optical spectrum is to be analyzed into the two types of polarization components, the first optical spectrum computation unit and the second optical spectrum computation unit respectively obtain optical spectrum detection of the two types of polarization components, and then the processing unit obtains the optical spectrum of the light beam based on the optical spectra of the two types of polarization components. In this way, when the light beam is unpolarized light, the optical spectrum of the light beam can also be obtained. In addition, the optical spectrum obtaining apparatus in which the processing unit provided in this embodiment of this application is located can not only obtain the optical spectrum of the unpolarized light, but also obtain an optical spectrum of polarized light. Therefore, the optical spectrum obtaining apparatus has a low requirement on the light beam whose optical spectrum needs to be analyzed.

In addition, the optical spectrum computation unit and a computational spectrometer obtain an optical spectrum by using a same principle. Therefore, compared with a dispersive spectrometer, the optical spectrum obtaining apparatus features a lower process requirement, lower preparation difficulty, a lower requirement on intensity of the light beam whose optical spectrum is to be analyzed, a smaller volume at same resolution, and the like. Compared with a Fourier spectrometer, the optical spectrum obtaining apparatus features a smaller volume at same resolution and a faster speed of obtaining the optical spectrum of the light beam.

Optionally, when an integrated unit is used, the processing unit provided in this embodiment of this application includes a processing module and a storage module. The processing module is configured to control and manage an action of the apparatus, for example, configured to support the apparatus in performing the actions performed by the processing unit in S1001 and S1002. The storage module is configured to support the apparatus in storing program code, data, and the like.

For example, the processing module is a processor or a controller, and the processing module can implement or execute various example logical blocks, modules, and circuits described with reference to content disclosed in embodiments of this application. Optionally, the processor is a combination for implementing a computing function, for example, a combination of one or more microprocessors, or a combination of a digital signal processor (digital signal processor, DSP) and a microprocessor. The storage module is a memory. The memory stores a program, and the processing module (for example, the processor) is configured to execute the program stored in the memory, to implement the operations performed by the processing unit in the optical spectrum obtaining method provided in any embodiment of this application.

Optionally, the processing unit further includes a communication module for communication between the apparatus and another device. For example, the communication module is a device, for example, a radio frequency circuit or a Bluetooth chip, that interacts with another device.

In an embodiment, when a processing module is a processor 202, a storage module is a memory 201, a communication module is a communication interface 203, and the processor 202, the memory 201, and the communication interface 203 are connected through a communication bus 204, a processing unit in this embodiment is shown in FIG. 12. In an optional implementation, the foregoing modules and the like included in the processing unit are computer programs stored in the memory, and are invoked by the processor to implement corresponding execution functions of the modules.

This application further provides a chip. The chip includes a programmable logic circuit and/or program instructions. When running, the chip is configured to implement the operations performed by the processing unit in any optical spectrum obtaining method provided in this application.

This application further provides a computer-readable storage medium. The storage medium stores a computer program. When the computer program is executed by a processor, the operations performed by the processing unit in any optical spectrum obtaining method provided in this application is implemented.

This application further provides a computer program product including instructions. When the computer program product runs on a computer, the computer is caused to perform the operations performed by the processing unit in any optical spectrum obtaining method provided in this application.

All or some of the foregoing embodiments can be implemented using software, hardware, firmware, or any combination thereof. When embodiments are implemented by using the software, all or some of embodiments can be implemented in a form of a computer program product. The computer program product includes one or more computer instructions. When the computer program instructions are loaded and executed on the computer, the procedure or functions according to embodiments of this application are all or partially generated. The computer is a general-purpose computer, a computer network, or another programmable apparatus. The computer instructions are stored in a computer-readable storage medium or may be transmitted from a computer-readable storage medium to another computer-readable storage medium. For example, the computer instructions are transmitted from a website, computer, server, or data center to another website, computer, server, or data center in a wired (for example, a coaxial optical cable, an optical fiber, or a digital subscriber line) or wireless (for example, infrared, radio, or microwave) manner. Optionally, the computer-readable storage medium is any usable medium accessible by a computer, or a data storage apparatus, for example, a server or a data center, integrating one or more usable media. Optionally, the usable medium is a magnetic medium (for example, a floppy disk, a hard disk, or a magnetic tape), an optical medium, a semiconductor medium (for example, a solid-state drive), or the like.

In this application, the terms "first", "second", and the like are merely intended for description, but cannot be understood as an indication or implication of relative importance. The term "at least one" means one or more, and "a plurality of" means two or more, unless expressly limited otherwise. The term "and/or" describes only an association relationship between associated objects, and represents that three relationships exist. For example, A and/or B represent/represents the following three cases: Only A exists, both A and B exist, and only B exists.

Different types of embodiments such as the method embodiments and the apparatus embodiments provided in embodiments of this application can be cross-referenced. This is not limited in embodiments of this application.

In the corresponding embodiments provided in this application, it should be understood that the disclosed apparatus, processing unit, and the like can be implemented in other composition manners. For example, the foregoing apparatus embodiments and processing unit embodiments are merely examples. For example, the division into the modules is merely logical function division and can be other division during actual implementation. For example, a plurality of modules are combined or integrated into another system, or some features are ignored or not performed. In addition, the displayed or discussed mutual couplings or direct couplings or communication connections are implemented through some interfaces. The indirect couplings or communication connections between the devices or modules are implemented in electrical or another form.

The units described as separate parts are or are not physically separate, and the parts described as units are or are not physical units, and can be located at one location, or can be distributed on a plurality of devices. Some or all of the units may be selected based on actual requirements to achieve the objectives of the solutions of embodiments.

The foregoing descriptions are merely optional implementations of this application, but the protection scope of this application is not limited thereto. Any equivalent modification or replacement readily figured out by a person skilled in the art within the technical scope disclosed in this application shall fall within the protection scope of this application. Therefore, the protection scope of this application should be subject to the protection scope of the claims.

## Claims

1. An optical spectrum obtaining apparatus, comprising: a beam splitting unit, a first optical spectrum computation unit, a second optical spectrum computation unit, and a processing unit, wherein
the beam splitting unit is configured to: receive a light beam from a light source, split the light beam into a first polarization component and a second polarization component with different polarization directions, transmit the first polarization component to the first optical spectrum computation unit, and transmit the second polarization component to the second optical spectrum computation unit;
the first optical spectrum computation unit is configured to compute an optical spectrum of the first polarization component;
the second optical spectrum computation unit is configured to compute an optical spectrum of the second polarization component; and
the processing unit is configured to obtain an optical spectrum of the light beam based on the optical spectrum of the first polarization component and the optical spectrum of the second polarization component.

2. The optical spectrum obtaining apparatus according to claim 1, wherein the first polarization component and the second polarization component are orthogonal to each other.

3. The optical spectrum obtaining apparatus according to claim 1 or 2, wherein the beam splitting unit comprises a fiber polarization beam splitter.

4. The optical spectrum obtaining apparatus according to claim 1 or 2, wherein the beam splitting unit comprises a polarization beam splitter prism.

5. The optical spectrum obtaining apparatus according to claim 4, wherein the optical spectrum obtaining apparatus further comprises a reflecting unit having a reflective surface;
the beam splitting unit is configured to: transmit the first polarization component to the first optical spectrum computation unit, and transmit the second polarization component to the reflective surface; and
the reflective surface is configured to reflect the second polarization component to the second optical spectrum computation unit.

6. The optical spectrum obtaining apparatus according to claim 5, wherein the reflecting unit comprises a reflecting prism; and
a first prism surface of the polarization beam splitter prism is attached to a second prism surface of the reflecting prism.

7. The optical spectrum obtaining apparatus according to any one of claims 1 to 6, wherein the processing unit is further configured to send a control signal to the first optical spectrum computation unit and the second optical spectrum computation unit;
the first optical spectrum computation unit is configured to compute the optical spectrum of the first polarization component based on the control signal; and
the second optical spectrum computation unit is configured to compute the optical spectrum of the second polarization component based on the control signal.

8. The optical spectrum obtaining apparatus according to claim 7, wherein the control signal indicates a start time point and exposure duration;
the first optical spectrum computation unit is configured to compute, at the start time point, the optical spectrum of the first polarization component received within the exposure duration; and
the second optical spectrum computation unit is configured to compute, at the start time point, the optical spectrum of the second polarization component received within the exposure duration.

9. The optical spectrum obtaining apparatus according to any one of claims 1 to 8, wherein the optical spectrum obtaining apparatus further comprises a collimator lens, wherein
the collimator lens is configured to: receive the light beam from the light source, and transmit the light beam to the beam splitting unit after collimating the light beam, wherein the collimation is for reducing divergence of the light beam.

10. The optical spectrum obtaining apparatus according to any one of claims 1 to 9, wherein an incident direction of the first polarization component on the first optical spectrum computation unit is parallel to an incident direction of the second polarization component on the second optical spectrum computation unit.

11. The optical spectrum obtaining apparatus according to any one of claims 1 to 10, wherein the first optical spectrum computation unit comprises a first medium layer, a first detector array, and a first processing module, and the second optical spectrum computation unit comprises a second medium layer, a second detector array, and a second processing module;
the beam splitting unit is configured to transmit the first polarization component to the first medium layer; the first detector array is configured to detect the first polarization component that passes through the first medium layer, to obtain spatial intensity distribution of the first polarization component; and the first processing module is configured to compute the optical spectrum of the first polarization component based on the spatial intensity distribution of the first polarization component;
the beam splitting unit is configured to transmit the second polarization component to the second medium layer; the second detector array is configured to detect the second polarization component that passes through the second medium layer, to obtain spatial intensity distribution of the second polarization component; and the second processing module is configured to compute the optical spectrum of the second polarization component based on the spatial intensity distribution of the second polarization component; and
the first processing module, the second processing module, and the processing unit are integrated together.

12. An optical spectrum obtaining method, wherein the method is performed by the optical spectrum obtaining apparatus according to any one of claims 1 to 11, the optical spectrum obtaining apparatus comprises: a beam splitting unit, a first optical spectrum computation unit, a second optical spectrum computation unit, and a processing unit, and the method comprises:
receiving, by the beam splitting unit, a light beam from a light source, splitting the light beam into a first polarization component and a second polarization component with different polarization directions, transmitting the first polarization component to the first optical spectrum computation unit, and transmitting the second polarization component to the second optical spectrum computation unit;
computing, by the first optical spectrum computation unit, an optical spectrum of the first polarization component;
computing, by the second optical spectrum computation unit, an optical spectrum of the second polarization component; and
obtaining, by the processing unit, an optical spectrum of the light beam based on the optical spectrum of the first polarization component and the optical spectrum of the second polarization component.

13. The method according to claim 12, wherein the method further comprises:
sending, by the processing unit, a control signal to the first optical spectrum computation unit and the second optical spectrum computation unit;
computing, by the first optical spectrum computation unit, the optical spectrum of the first polarization component comprises that the first optical spectrum computation unit is configured to compute the optical spectrum of the first polarization component based on the control signal; and
computing, by the second optical spectrum computation unit, the optical spectrum of the second polarization component comprises that the second optical spectrum computation unit is configured to compute the optical spectrum of the second polarization component based on the control signal.

14. The method according to claim 13, wherein the control signal indicates a start time point and exposure duration;
that the first optical spectrum computation unit is configured to compute the optical spectrum of the first polarization component based on the control signal comprises:
the first optical spectrum computation unit is configured to compute, at the start time point, the optical spectrum of the first polarization component received within the exposure duration; and
that the second optical spectrum computation unit is configured to compute the optical spectrum of the second polarization component based on the control signal comprises:
the second optical spectrum computation unit is configured to compute, at the start time point, the optical spectrum of the second polarization component received within the exposure duration.

15. An optical spectrum obtaining method, wherein the method is performed by a processing unit in the optical spectrum obtaining apparatus according to any one of claims 1 to 11, and the optical spectrum obtaining apparatus comprises: a beam splitting unit, a first optical spectrum computation unit, a second optical spectrum computation unit, and the processing unit; the beam splitting unit is configured to: receive a light beam from a light source, split the light beam into a first polarization component and a second polarization component, transmit the first polarization component to the first optical spectrum computation unit, and transmit the second polarization component to the second optical spectrum computation unit; the first optical spectrum computation unit is configured to compute an optical spectrum of the first polarization component; and the second detector array is configured to compute an optical spectrum of the second polarization component; and
the method comprises:
obtaining the optical spectrum of the first polarization component computed by the first optical spectrum computation unit and the optical spectrum of the second polarization component computed by the second optical spectrum computation unit; and
obtaining an optical spectrum of the light beam based on the optical spectrum of the first polarization component and the optical spectrum of the second polarization component.

16. A processing unit, wherein the processing unit belongs to the optical spectrum obtaining apparatus according to any one of claims 1 to 11, and the optical spectrum obtaining apparatus further comprises: the optical spectrum obtaining apparatus comprises: a beam splitting unit, a first optical spectrum computation unit, a second optical spectrum computation unit, and the processing unit; the beam splitting unit is configured to: receive a light beam from a light source, split the light beam into a first polarization component and a second polarization component, transmit the first polarization component to the first optical spectrum computation unit, and transmit the second polarization component to the second optical spectrum computation unit; the first optical spectrum computation unit is configured to compute an optical spectrum of the first polarization component; the second detector array is configured to compute an optical spectrum of the second polarization component; and the processing unit comprises:
an obtaining module, configured to obtain the optical spectrum of the first polarization component computed by the first optical spectrum computation unit and the optical spectrum of the second polarization component computed by the second optical spectrum computation unit; and
a processing module, configured to obtain an optical spectrum of the light beam based on the optical spectrum of the first polarization component and the optical spectrum of the second polarization component.

17. A processing unit, wherein the processing unit belongs to the optical spectrum obtaining apparatus according to any one of claims 1 to 11, and the optical spectrum obtaining apparatus further comprises: the optical spectrum obtaining apparatus comprises: a beam splitting unit, a first optical spectrum computation unit, a second optical spectrum computation unit, and the processing unit; the beam splitting unit is configured to: receive a light beam from a light source, split the light beam into a first polarization component and a second polarization component, transmit the first polarization component to the first optical spectrum computation unit, and transmit the second polarization component to the second optical spectrum computation unit; the first optical spectrum computation unit is configured to compute an optical spectrum of the first polarization component; the second detector array is configured to compute an optical spectrum of the second polarization component; and the processing unit comprises:
a processor and a memory, wherein the memory stores a program, and the processor is configured to execute the program stored in the memory, to implement the optical spectrum obtaining method according to claim 15.

18. A chip, wherein the chip comprises a programmable logic circuit and/or program instructions, and the chip is configured to implement the optical spectrum obtaining method according to claim 15 when running.

19. A computer-readable storage medium, wherein the computer-readable storage medium stores instructions; and when the instructions are run on a computer, the computer is caused to perform the optical spectrum obtaining method according to claim 15.
